# EUROPEAN PATENT SPECIFICATION

(11) **EP 2 280 436 B1**
(45) Date of publication and mention of the grant of the patent: **30.08.2017**
(21) Application number: 10008019.1
(22) Date of filing: 30.07.2010
(51) Int. Cl.: B60L 11/18, B62K 19/30, H01M 2/10, H01M 2/20, H01M 2/30, B60K 1/04, B62M 6/90, B60S 5/06, B62K 11/10

(54) **Removable electric vehicle battery pack and electric vehicle equipped with that battery pack**
Entfernbares Batteriepack für elektrische Fahrzeuge und mit diesem Batteriepack ausgerüstetes elektrisches Fahrzeug
Ensemble de batterie de véhicule électrique amovible et véhicule électrique équipé de cet ensemble de batterie

(30) Priority: 30.07.2009 JP 2009177684; 08.07.2010 JP 2010156250
(43) Date of publication of application: 02.02.2011
(73) Proprietor: Suzuki Motor Corporation, Shizuoka-Ken 432-8611 (JP)
(72) Inventor: Yoneda, Haruhiko, Osaka, 570-8677 (JP); Fukukawa, Kouichi, Osaka, 570-8677 (JP); Yoneyama, Shingo, Osaka, 570-8677 (JP); Hakamata, Osamu, Sizuoka-Ken 432-8611 (JP); Ilda, Kazuhiro, Sizuoka-Ken 432-8611 (JP); Honma, Akinori, Sizuoka-ken 432-8611 (JP)
(74) Representative: Kotitschke, Bernd

(56) References cited:
- EP-A2- 2 210 803
- WO-A1-99/36974
- DE-U1-202010 010 522
- FR-A1- 2 828 665
- GB-A- 1 569 967
- JP-A- 2003 034 281
- US-A1- 2009 000 835

## Description

### BACKGROUND OF THE INVENTION

### 1. Field of the Invention

The present invention relates to a battery pack that loads in a removable manner primarily in electric vehicles such as electric motor-bikes (e.g. electric motor scooters and motorcycles) and bicycles with electrical-assist to supply power to a motor that drives the electric vehicle, and to the electric vehicle equipped with that battery pack.

### 2. Description of the Related Art

Document JP 2003 034281 A is directed to a motor-driven bicycle comprising a long length battery case which can be repetitively charged and which is arranged along the longitudinal direction of a frame member of a body frame. The battery case is provided to be freely oscillated on and disconnected from the body frame side. By a series of installing operations to the body frame wherein one end part of the battery case is engaged with the body frame side and oscillated around the end part, a discharging connector of the battery case is connected to a motor side connector of the body frame side.

Document GB 1 569 967 A is directed to a battery and fitment therefor. The fitment is adapted for permanent fixing to a support and comprising a base to support the battery box, upstanding portions to engage the box when placed on the base to assist location of the box on the base and terminals remote from the upstanding portions.

Document US 2009/0000835 A1 describes a power supply assembly for motorized vehicles. The power supply assembly comprises a battery and a housing structure surrounding the battery. The power supply assembly is removable supported on the vehicle frame. A latching mechanism is provided having a pivoting actuator that moves between a locking position and a release position.

A battery pack, which supplies power to an electric motor that drives an electric vehicle such as an electric motor-bike, houses high capacity batteries, or numerous batteries to produce high output voltage and current. This serves to increase output power, or more specifically to increase the battery discharging power supplied to the electric vehicle. This battery pack has a case provided with a connector, and has a structure that allows it to be loaded in a removable manner in an electric vehicle. When the battery pack is loaded in the electric vehicle, the battery pack structure enables electrical connection of the connector to connecting terminals in the electric vehicle. Since high current is supplied to drive the electric vehicle, the discharge current flowing through the connector and connecting terminals is extremely high. Consequently, reliable electrical connection between the connector and the connecting terminals, and specifically a low-resistance connection is important. In particular, since an electric vehicle is used under conditions that generate vibration, it is important to effectively prevent connector-to-connecting terminal contact resistance malfunction due to vibration. Contact resistance malfunction due to vibration can be effectively prevented by a structure that connects the connector and connecting terminals through the weight of the battery pack. (Refer to Japanese Laid-Open Patent Publication 2002-170537.)

As shown in Fig. 1 (representative figure of JP 2002-170537-A), this structure has a connector 93 attached at the bottom end of the case 92 in a manner that opens an insertion section 94 through the bottom of the case 92. When the battery pack is loaded in the electric vehicle, this structure inserts the connector 93 in the connecting terminals (not illustrated) via the battery pack's own weight.

In this battery pack, the heavy weight of the battery pack acts in a direction to press the connector onto the connecting terminals. Since the force of gravity acts constantly, even when the battery pack is vibrated, the connector does not separate from the connecting terminals and the connection between the connector and the connecting terminals can be maintained in a desirable state.

### SUMMARY OF THE INVENTION

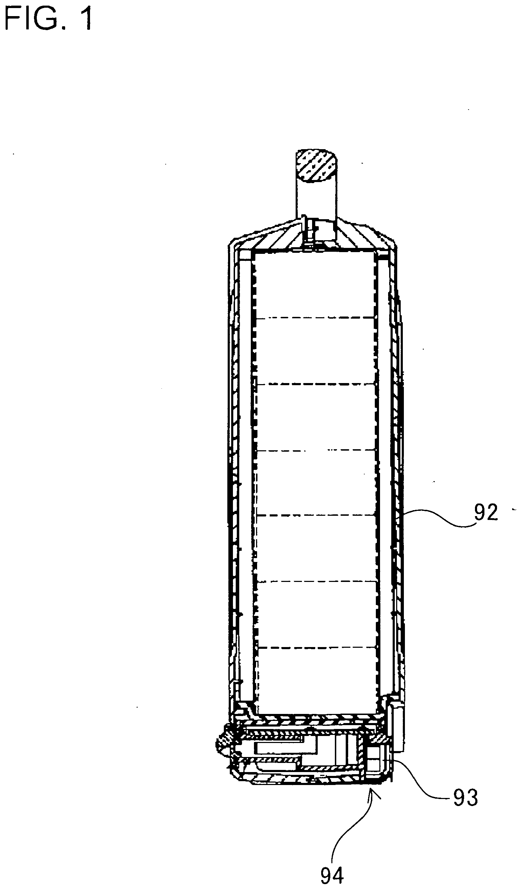

However, since the connector 93 is established at the bottom the case 92 of the battery pack shown in Fig. 1, water and foreign objects can enter and collect at the bottom of the loading cavity that holds the battery pack in a removable manner. Consequently, this battery pack has the drawback that water and foreign objects at the bottom of the loading cavity are a cause of connector-to-connecting terminal contact resistance failure. In particular, removal of material such as foreign objects that collect at the bottom of the electric vehicle loading cavity is difficult, and this battery pack has the drawback that eliminating contact resistance failure is troublesome.

The present invention was developed with the object of further correcting the drawbacks described above. Thus, it is an important object of the present invention to provide a removable electric vehicle battery pack and electric vehicle equipped with that battery pack wherein the battery pack can be easily loaded in a removable manner in the loading cavity of the electric vehicle while connecting the connector and connecting terminals in an ideal state and effectively preventing adverse effects from moisture and foreign objects that enter the loading cavity.

The removable electric vehicle battery pack of the present invention is inserted downward into and disposed in a fixed position in a loading cavity 51 in the electric vehicle 50 to connect a connector 3 to connecting terminals 52 mounted in the electric vehicle 50 and supply power to the electric vehicle 50. The connector 3 of the battery pack is attached to a case 2 that houses a plurality of batteries 11 that can be charged. The connector 3 connects to the electric vehicle 50 connecting terminals 52 to supply power from the batteries 11 housed in the case 2. The connector 3 is attached to the case 2 in an orientation that establishes an insertion section 33 on the underside of the case 2. This enables the connector 3 to connect via the weight of the battery pack to the connecting terminals 52 mounted in the electric vehicle 50. Further, the case 2 is provided with a case extension 21 that protrudes from the surface of the case 2 and holds the connector 3 inside. The underside of the case extension 21 is disposed above the bottom surface of the case 2. The underside of the case extension 21 has a connector window 22 opened to expose the connector 3 insertion section 33 outside the case 2. The case extension 21 of the battery pack is inserted into the electric vehicle 50 loading cavity 51 to connect the connector 3 to the connecting terminals 52 mounted in the electric vehicle 50.

The battery pack described above has the characteristic that it can be easily loaded in a removable manner in the loading cavity of the electric vehicle while connecting the connector and connecting terminals in an ideal state and effectively preventing adverse effects from moisture and foreign objects that enter the loading cavity. This is because the battery pack is provided with a case extension on the surface of the case that holds the connector inside, the underside of the case extension is disposed above the bottom surface of the case, and the connector insertion section is established on the underside of the case extension. Since the connector insertion section is disposed above the bottom of the case by virtue of the case extension, the connector reliably connects to the connecting terminals via the weight of the battery pack even when used under vibrating conditions, and contact resistance malfunction due to water and foreign objects entering the loading cavity is avoided. Consequently, this battery pack achieves the characteristic that the connector and connecting terminals can always be connected in an ideal low-resistance state.

In the removable electric vehicle battery pack of the present invention, the lateral width of the case extension 21 can be tapered to become narrower at the lower end. In this battery pack, since the lateral width of the case extension is tapered to become narrower at the lower end, the battery pack can be can be smoothly inserted without lateral misalignment into the proper position in the electric vehicle loading cavity, and the connector can be properly aligned in position with the connecting terminals for reliable electrical connection.

The removable electric vehicle battery pack of the present invention can be provided with a sealing rim 24 protruding from the perimeter of the upper part of the case 2 that closes-off the gap 53 between the battery pack case 2 and the loading cavity 51 in the electric vehicle 50. In this battery pack, the sealing rim provided on the upper part of the case can effectively prevent foreign objects from entering the electric vehicle loading cavity while allowing smooth insertion of the battery pack into the proper position in the loading cavity. Accordingly, this battery pack has the characteristic that contact resistance malfunction due to foreign objects entering the loading cavity can be more effectively prevented while allowing more stable and reliable connection of the connector to the connecting terminals. Further, since the sealing rim on the upper part of the case closes-off the gap between the battery pack case and the loading cavity, relative movement between the battery pack and the loading cavity can be suppressed. Consequently, electric vehicle vibration does not cause the battery pack to vibrate relative to the loading cavity, and detrimental effects due to vehicle vibration can be more effectively prevented.

In the removable electric vehicle battery pack of the present invention, the sealing rim 24 can be provided around all parts of the case 2 except the case extension 21. In this battery pack, the case extension and sealing rim can be guided into the loading cavity opening to close off the gap between the battery pack case and the loading cavity.

In the removable electric vehicle battery pack of the present invention, the electric vehicle 50 can be either an electric motor-bike or a bicycle with electrical-assist. This battery pack has the characteristic that contact resistance malfunction between the connector and connecting terminals can be effectively prevented to allow stable low-resistance connection at all times even while the battery pack is a large, heavy structure appropriate for supplying high power output to a vehicle such as an electric motor-bike or bicycle with electrical-assist.

In the removable electric vehicle battery pack of the present invention, the bottom surface of the case extension 21 can be disposed in a range of 20% of the vertical height of the case 2 above and below the vertical center. This battery pack has the characteristic that it can be smoothly inserted into a fixed position in the electric vehicle loading cavity with both sides of the case extension and the tapered regions of both sides of the case extension relatively high, and with the insertion section opened at the underside of the case extension positioned vertically above and separated from the bottom of the loading cavity.

The removable electric vehicle battery pack of the present invention can be provided with a folding grip 9 on the upper part of the case 2. This battery pack can be picked up by the grip allowing the heavy battery pack to be easily loaded into, and removed from the loading cavity.

The removable electric vehicle battery pack of the present invention can be provided with a locking pin 15 at the bottom part of the case 2 that can be locked in a detachable manner into a locking mechanism 60 established at the bottom of the electric vehicle 50 loading cavity 51. This battery pack can be smoothly inserted into the proper position in the electric vehicle loading cavity, and can be reliably retained in a fixed position in the loading cavity via the locking pin provided at the bottom of the case. Consequently, relative movement between the battery pack and the loading cavity can be reliably prevented, and detrimental effects due to electric vehicle vibration can be more effectively prevented.

In the removable electric vehicle battery pack of the present invention, the connector 43 is provided with a connector case 71 housing flexible contacts 72 that make electrical connection with the connecting terminals 52. Insertion sections 73 is opened through the bottom surface of the connector case 71 for connecting terminal 52 insertion, and the connector case 71 is mounted in the battery pack case 42 in a manner that allows it to move freely in the direction of connecting terminal 52 insertion. In this battery pack, since the connector case, which connects with the connecting terminals mounted in the electric vehicle, is attached to the battery pack case in a manner that allows movement in the connecting terminal insertion direction, the connector case connected to the connecting terminals can move independently relative to the battery pack case. Consequently, even if the battery pack is vibrated when the vehicle is driven, the connector case and connecting terminals are maintained as a connected unit, and shift in the relative position of the connecting terminals with respect to the flexible contacts is effectively prevented to reliably avoid problems such as contact resistance malfunction.

In the removable electric vehicle battery pack of the present invention, spring material 84 can be provided acting in a downward direction on the connector case 71, and the connector case 71 can be moved resiliently up and down inside the case extension 81 through the action of the spring material 84. In this battery pack, vibration during vehicle operation that acts vertically on the battery pack case can be effectively absorbed by the spring material to effectively prevent the transmission of battery pack case vibration to the connector case.

The removable electric vehicle battery pack of the present invention can be provided with a guiding mechanism 80 that sets the range of movement of the connector case 71. The guiding mechanism 80 can be configured with guiding holes 76 established through the connector case 71, and guide rods 86 that insert through the guiding holes 76 and are attached to the battery pack case 42. The guiding holes 76 can be long slots that allow connector case 71 movement in the connecting terminal 52 insertion direction. This battery pack can set the range of connector case movement inside the case extension via a guiding mechanism having an extremely simple structure.

The electric vehicle equipped with the battery pack of the present invention has a loading cavity 51 to hold the battery pack, which is inserted downward, into a fixed position. The connector 3 of the battery pack loaded in the loading cavity 51 connects with connecting terminals 52 mounted in the loading cavity 51, and power is supplied from the battery pack. The battery pack connector 3 is attached to a case 2 that houses a plurality of batteries 11 that can be charged. The connector 3 connects to the loading cavity 51 connecting terminals 52 to supply power from the batteries 11 housed in the case 2. The connector 3 is attached to the case 2 in an orientation that establishes an insertion section 33 on the underside of the case 2. This enables the connector 3 to connect via the weight of the battery pack to the connecting terminals 52 mounted in the loading cavity 51. Further, the case 2 is provided with a case extension 21 that protrudes from the surface of the case 2 and holds the connector 3 inside. The underside of the case extension 21 is disposed above the bottom surface of the case 2. The underside of the case extension 21 has a connector window 22 opened to expose the connector 3 insertion section 33 outside the case 2. In addition, the electric vehicle loading cavity 51 has a ledge surface 54 that faces the bottom surface of the battery pack case extension 21. The ledge surface 54 is disposed above the bottom surface of the loading cavity 51, and the connecting terminals 52 are disposed on that ledge surface 54. In the electric vehicle, the battery pack is inserted into the loading cavity 51, and the connector 3 exposed from the bottom surface of the case extension 21 is connected with the connecting terminals 52 disposed on the ledge surface 54.

The electric vehicle described above has the characteristic that the battery pack can be easily loaded in a removable manner in the loading cavity while connecting the connector and connecting terminals in an ideal state and effectively preventing adverse effects from moisture and foreign objects that enter the loading cavity. This is because the battery pack is provided with a case extension on the surface of the case that holds the connector inside, the underside of the case extension is disposed above the bottom surface of the case, and the connector insertion section is established on the bottom surface of the case extension. In addition, the electric vehicle loading cavity has a ledge surface disposed opposite the bottom surface of the battery pack case extension, the ledge surface is disposed above the bottom surface of the loading cavity, and the connecting terminals are disposed on that ledge surface. In the electric vehicle, since the battery pack connector insertion section connects with connecting terminals disposed on the ledge surface established above the bottom of the loading cavity, the connector reliably connects to the connecting terminals via the weight of the battery pack even when used under vibrating conditions, and contact resistance malfunction due to water and foreign objects entering the loading cavity is avoided. Consequently, this electric vehicle achieves the characteristic that the connector and connecting terminals can always be connected in an ideal low-resistance state.

In the electric vehicle equipped with the battery pack of the present invention, the ledge surface 54 opposite the bottom surface of the battery pack case extension 21 can be inclined to drain off water entering the loading cavity 51 to the bottom surface of the loading cavity 51. This electric vehicle has the characteristic that even if water and dirt, etc. enter the battery pack loading cavity, accumulation of water and dirt at the connection region of the connector and connecting terminals is effectively prevented. This is because the ledge surface opposite the bottom surface of the battery pack case extension is inclined, and water entering the loading cavity is drained off towards the bottom.

The above and further objects of the present invention as well as the features thereof will become more apparent from the following detailed description to be made in conjunction with the accompanying drawings.

### BRIEF DESCRIPTION OF THE DRAWINGS

Fig. 1 is a cross-section view of a prior art battery pack;
Fig. 2 is an oblique view of a battery pack for an embodiment of the present invention;
Fig. 3 is an oblique view from the backside of the battery pack shown in Fig. 2;
Fig. 4 is an oblique view from the bottom of the battery pack shown in Fig. 2;
Fig. 5 is a vertical cross-section view of the battery pack shown in Fig. 2;
Fig. 6 is an exploded oblique view of the battery pack shown in Fig. 2;
Fig. 7 is an exploded oblique view of the battery block of the battery pack shown in Fig. 6;
Fig. 8 is a side view with one part in an enlarged cross-section inset showing the battery pack of Fig. 2 loaded in an electric vehicle;
Fig. 9 is a vertical cross-section laterally across the electric vehicle shown in Fig. 8 with one part in an enlarged inset;
Fig. 10 is a vertical cross-section view showing the battery pack being loaded in the loading cavity of the electric vehicle;
Fig. 11 is a vertical cross-section laterally across the loading cavity showing the battery pack being loaded in the loading cavity of the electric vehicle;
Fig. 12 is an enlarged cross-section through the line XII-XII in Fig. 9 showing the connecting configuration of the connector and connecting terminals;
Fig. 13 is an enlarged oblique view showing the connecting configuration of the locking mechanism and locking pin at the bottom of the case;
Fig. 14 is a front view of one example of a locking mechanism showing the locking pin in the unlocked state;
Fig. 15 is a front view of one example of a locking mechanism showing the locking pin in the locked state;
Fig. 16 is a side view with one part in cross-section of a battery pack for another embodiment of the present invention;
Fig. 17 is an exploded oblique view showing the connecting configuration of the connector and case of the battery pack shown in Fig. 16;
Fig. 18 is an oblique view from the backside showing the connecting configuration of the connector and case of the battery pack shown in Fig. 17;
Fig. 19 is an oblique view from the bottom showing the connecting configuration of the connector and case of the battery pack shown in Fig. 18;
Fig. 20 is an enlarged cross-section through the line XX-XX in Fig. 16 showing the connecting configuration of the connector and connecting terminals; and
Fig. 21 is an enlarged cross-section showing the connector of Fig. 20 connected in the connecting terminals.

### DETAILED DESCRIPTION OF THE EMBODIMENT(S)

The following describes embodiments of the present invention based on the figures.

The battery pack of the present invention is loaded in an electric vehicle to supply power to the motor that drives the vehicle. In the present application, an electric vehicle means a vehicle that is driven by electric power supplied by the battery pack loaded on-board. Accordingly, the battery pack of the present invention can be used in all types of vehicles driven by a motor with the battery pack loaded on-board such as an electric motor-bike (including an electric motor scooter and an electric motorcycle), an electric wheel-chair, an electric three-wheeled vehicle, a bicycle with electrical-assist, and an electric go-cart. The following describes in detail embodiments where the electric vehicle is an electric motor-bike.

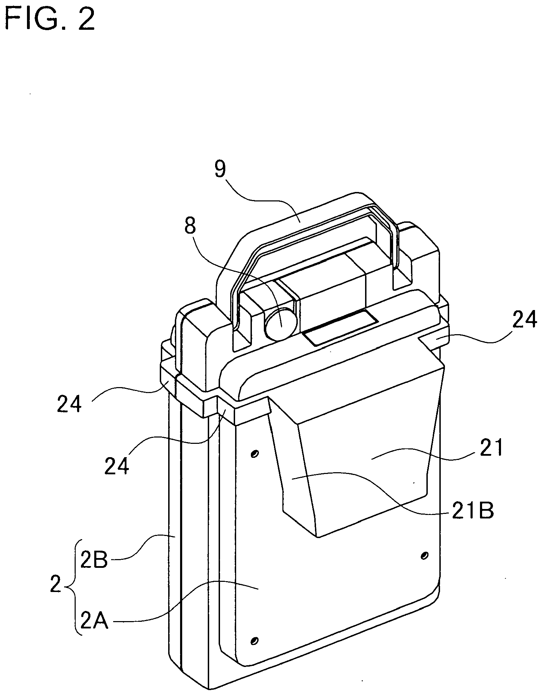

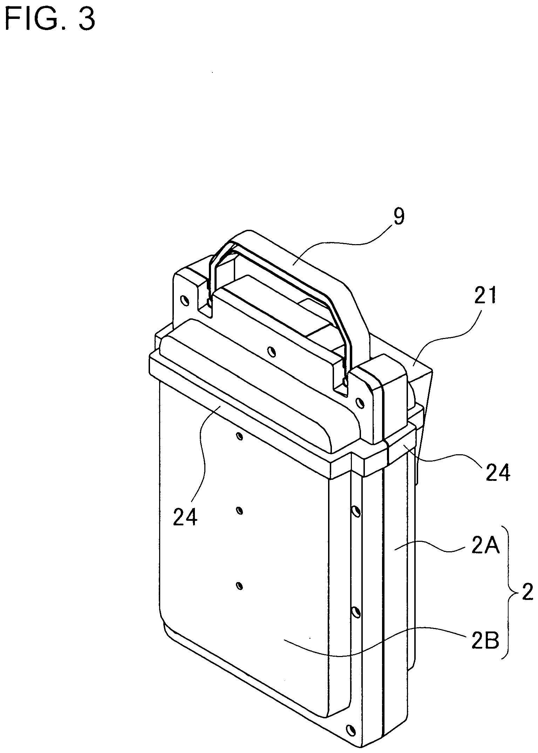

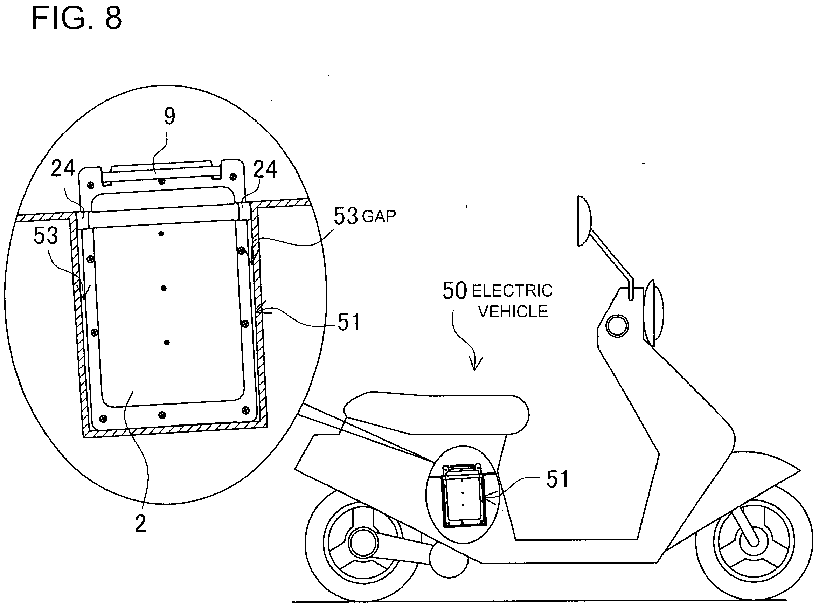

As illustrated in Figs. 8-11, the battery pack shown in Figs. 2-7 is inserted downward into, and set in a fixed position in the loading cavity 51 provided in the electric vehicle 50, the connector 3 is connected with connecting terminals 52 mounted in the electric vehicle 50, and electric power is supplied to the motor in the electric motor-bike, which is the electric vehicle 50. The electric vehicle 50 loading cavity 51 has a shape that can hold the battery pack in a fixed position in a removable manner. For example, the shape of the inside of the loading cavity 51 can be essentially the same as the outside shape of the battery pack with an open upper end. In addition, the loading cavity 51 has connecting terminals 52 mounted in a position to connect with the connector 3 of the battery pack loaded in the loading cavity 51. Since the battery pack inserts downward into the loading cavity 51 to connect the connector 3 with the connecting terminals 52, the connecting terminals 52 are mounted in an orientation extending upward and exposed on the inside of the loading cavity 51. The loading cavity 51 has plastic side-walls and is fabricated by molding.

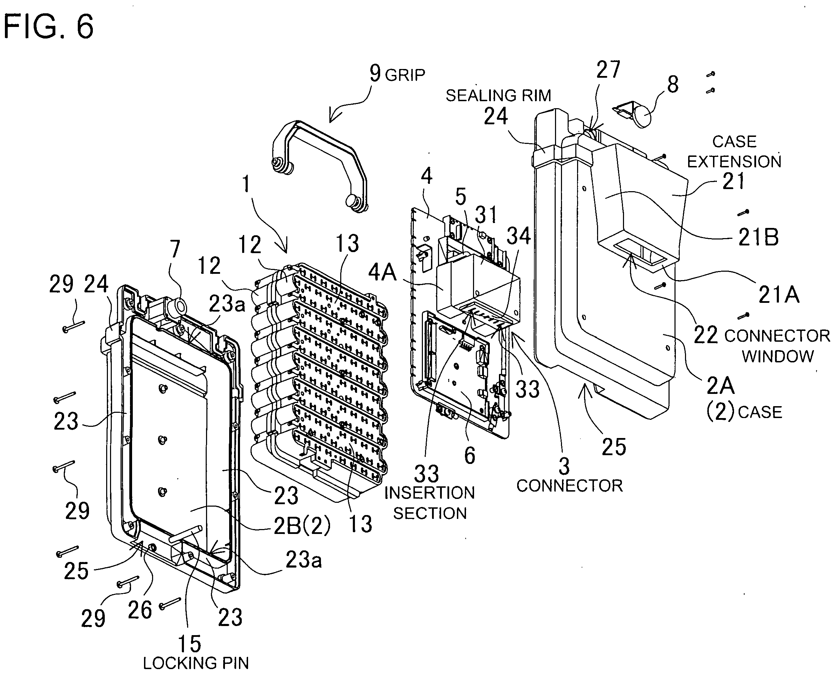

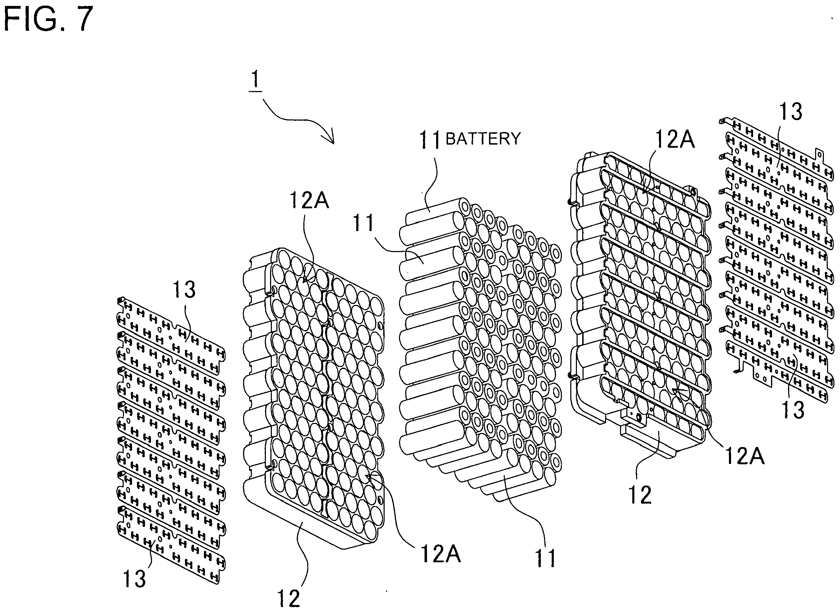

As illustrated in Fig. 7, the battery pack of Fig. 6 has a plurality of batteries 11 connected in series and parallel and arranged as a battery block 1, and that battery block 1 is held in the case 2. The battery block 1 has a plurality of circular cylindrical batteries 11 disposed in fixed positions in a battery holder 12, connected in series to increase output voltage, and connected in parallel to increase charging current. The batteries 11 are nickel-hydride batteries. However, rectangular batteries can also be used as the battery block batteries, and any rechargeable batteries such as lithium ion batteries or nickel-cadmium batteries can be used instead of nickel-hydride batteries. The battery block 1 of Fig. 7 has circular cylindrical batteries 11 arranged in many rows and columns. To hold a plurality of batteries 11 in fixed positions, the battery holder 12 is provided with a plurality of cylinders 12A open at both ends and formed from plastic in single-piece construction. The battery holder 12 cylinders 12A are disposed parallel to each other. Further, batteries 11 inserted in many rows and columns of cylinders 12A are arranged with adjacent rows offset (as in a pile of logs) to position the batteries 11 in one row between the batteries 11 in the adjacent row. The electrode terminals established at both ends of the batteries 11 inserted in the battery holder 12 cylinders 12A are exposed from the battery holder 12, and lead-plates 13 are weld-attached to the electrode terminals at both ends of the batteries 11 to connect them in series and parallel and form a single-unit structure.

The battery block 1 has an insulating plate 4 attached to one side, and the connector 3 is mounted on that insulating plate 4. The connector 3 connects with the connecting terminals 52 of the electric vehicle 50 such as an electric motor-bike to supply battery 11 power to the electric vehicle 50. The connector 3 is housed inside the case extension 21, which is established in a manner protruding from the surface of the case 2. To dispose the connector 3 in a location that protrudes from the surface of the case 2, an attachment stand-off 4A is formed in single-piece structure protruding from the surface of the plastic insulating plate 4 to mount the connector 3. The connector 3 mounted on the attachment stand-off 4A is attached in a position that protrudes from the side of the battery block 1.

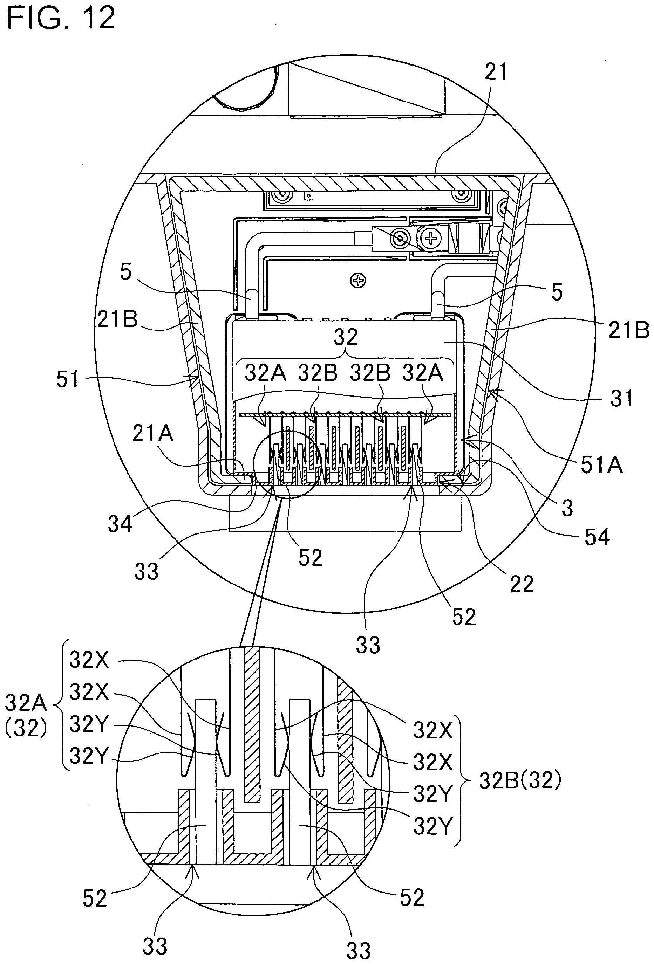

As shown in the enlarged cross-section of Fig. 12, the connector 3 has flexible contacts 32 housed inside a plastic insulating cover 31. The bottom surface of the insulating cover 31 is open to form an insertion section 33 for insertion of the connecting terminals 52. As shown in Fig. 6, the insulating cover 31 of the connector 3 is mounted on the attachment stand-off 4A on the insulating plate 4, and the flexible contacts 32 are connected to the battery block 1 via lead-wires 5. The insulating cover 31 is provided with an alignment projection 34 that inserts into the connector window 22 in the case 2 case extension 21, and the connecting terminal 52 insertion section 33 is disposed inside this alignment projection 34. The alignment projection 34 is established on the insulating cover 31 in a manner that protrudes out from the bottom surface. The outline of the alignment projection 34 is essentially the same shape as the inside of the connector window 22 established in the case 2 case extension 21. Specifically, the alignment projection 34 has a shape that inserts into the connector window 22 and enables the connector 3 alignment projection 34 to be disposed in a precise position in the connector window 22. This structure allows the connector 3 to be disposed in a precise position in the case extension 21.

The connector 3 flexible contacts 32 connect with the connecting terminals 52 established in the electric motor-bike, which is the electric vehicle 50, to supply power from the battery pack to the electric motor-bike. The connector 3 shown in Fig. 12 is provided with a plurality of flexible contacts 32. The plurality of flexible contacts 32 are made up of power supply terminals 32A that supply power from the battery pack to the motor in the electric motor-bike, and signal terminals 32B that transmit signals between the battery pack and the electric motor-bike. The signal terminals 32B transmit battery data such as battery 11 remaining capacity and battery 11 temperature from the battery pack to the electric motor-bike. Since the battery pack is inserted downward into the electric motor-bike loading cavity 51 to connect the connecting terminals 52 to the flexible contacts 32, the insertion section 33 for insertion of the connecting terminals 52 is established at the bottom of the connector 3. Each flexible contact 32 shown in the enlarged cross-section of Fig. 12 has a pair of flexible arms 32X that resiliently sandwiches both sides of each metal blade connecting terminal 52, which is mounted in a vertical orientation and inserts upward from below. The end of each pair of flexible arms 32X has folded sections 32Y that are bent mutually inward. The folded sections 32Y are established opposite each other, and the gap between the folded sections 32Y narrows in the direction of connecting terminal 52 insertion, which is vertically upward from below in the figures. This establishes a configuration the resiliently sandwiches the inserted connecting terminals 52.

The battery pack of Fig. 6 has a printed circuit board 6 that implements electronic circuitry with functions such as controlling battery 11 charging and discharging, and detecting remaining battery 11 capacity. The printed circuit board 6 is mounted on the surface of the insulating plate 4. Further, the battery pack of Fig. 6 has a charging sub-connector 7 that connects to a battery charger to charge the batteries 11. The sub-connector 7 is mounted on the upper part of the case 2 and is connected to the battery block 1 via lead-wires (not illustrated). The case 2 is provided with an opening 27 to expose the sub-connector 7 outside the case, and a removable closing cap 8 is provided to close the opening 27. When the sub-connector 7 is not in use, namely when the battery pack is loaded in the loading cavity 51, the removable closing cap 8 is placed to close-off the opening 27 in the case 2 and prevent the entry foreign objects.

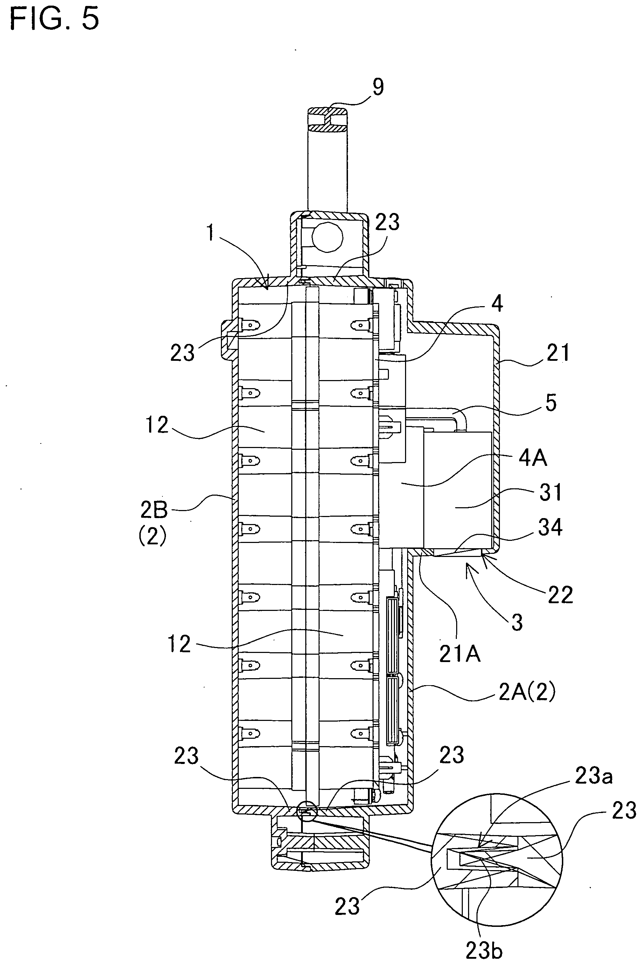

The case 2 is made up of a first case 2A and a second case 2B formed from plastic, and the first case 2A and the second case 2B are joined by screws 29. Inner walls 23 are formed in single-piece construction to hold the battery block 1 inside the inner walls 23 of the case 2. Since the battery block 1 is held inside the inner walls 23 of a case 2 with this structure, water and foreign object intrusion into the battery block 1 can be more effectively prevented. Further, as shown in the enlarged inset in Fig. 5, the inner walls 23 established in the first case 2A and the second case 2B are provided with connecting grooves 23a on one side, and connecting ridges 23b that insert into the connecting grooves 23a on the other side. When the first case 2A and the second case 2B are connected, the inner wall 23 connecting ridges 23b are aligned in the connecting grooves 23b to more reliably prevent water and foreign objects from entering inside the inner walls 23.

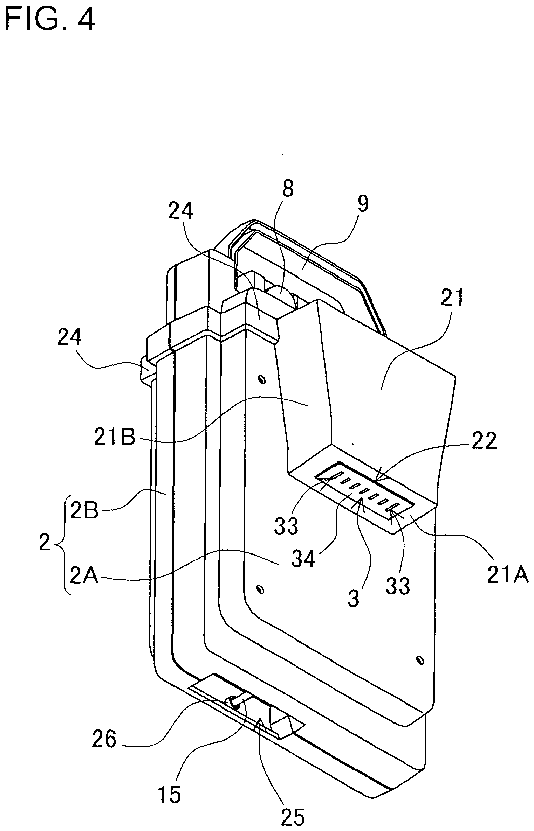

The case extension 21 that houses the connector 3 is established protruding from one side of the surface of the case 2. The case 2 of Figs. 4-6 has the case extension 21 formed from plastic in single-piece construction with the first case 2A. The case extension 21 has a shape that allows it to hold the connector 3 inside, namely the inside shape of the case extension 21 is made larger than the outside shape of the connector 3. The case extension 21 of Fig. 12 has a constant thickness that can hold the connector 3, parallel upper and lower surfaces, and side-walls 21B that slope on both sides to taper the case extension 21 making in gradually narrower towards the bottom.

The case extension 21 is established on the case 2 in a location that positions the bottom surface of the case extension 21 above the bottom of the case 2 when the battery pack is loaded in the electric vehicle 50. Location of the case extension 21 at this vertical position on the case 2 serves to dispose the connector 3 insertion section 33 above the bottom of the case 2. For example, if we suppose the connector is established at the bottom of the case and material such as dirt, water, and foreign objects enter the electric motor-bike loading cavity, occurrence of connection failure at the connector becomes a concern. However, since the case extension 21 of the present embodiment is established on a vertical wall of the case 2 with the bottom surface of the case extension 21 disposed above the bottom surface of the case 2, occurrence of this type of failure can be reduced. For the case 2 in Figs. 4-6, the case extension 21 bottom surface is disposed at the center region with respect to the vertical height of the case 2. However, although not illustrated, the case extension bottom surface can also be disposed above the bottom of the case 2 in a range 20% above and below the midpoint of the vertical height of the case 2.

The bottom surface of the case extension 21 is opened at the connector window 22 to expose the connector 3 insertion section 33 outside the surface of the case 2. The inside shape of the connector window 22 is sized to avoid position shift in the connector 3 alignment projection 34. Specifically, the inside shape of the connector window 22 is made almost the same size as the alignment projection 34, but is made slightly larger than the alignment projection 34 to allow insertion. In the case extension 21 of Fig. 6, the connector window 22 has a rectangular shape and the outside shape of the alignment projection 34 is also rectangular. The bottom surface of the case extension 21, which is a bottom surface plate 21A, has a thickness equal to the height that the alignment projection 34 projects outward from the connector 3. This arrangement can avoid protrusion of the alignment projection 34 out of the bottom surface of the case extension 21.

The case extension 21 of Fig. 12 has sloping side-walls 21B with the same slope on both sides giving it a tapered shape that makes it gradually narrower towards the bottom. The angle of both sloping side-walls 21B with respect to the vertical direction of battery pack insertion in the electric motor-bike is preferably 5° to 15°. Although both side-walls 21B of the case extension 21 of Fig. 12 have same slope angle, there is no requirement to always make both sides with the same slope angle. The slope angle on one side can be greater than that on the other side, or the side-wall on one side can be sloped while the side-wall on the other side can be vertical.

Further, the case 2 of Figs. 2-5 is provided with a sealing rim 24 protruding from the perimeter of the upper part of the case 2 that closes-off the gap between the battery pack case 2 and the loading cavity 51 in the electric vehicle 50. Since the case extension 21 is established in a manner that protrudes from the surface of the case 2, the sealing rim 24 is established around all parts of the case 2 except where the case extension 21 is disposed. As shown in Figs. 8-11, when the battery pack is inserted into the electric motor-bike loading cavity 51, the sealing rim 24 is inserted into the loading cavity 51 after almost all of the battery pack has been inserted. Therefore, while allowing smooth insertion of the battery pack, the sealing rim 24 closes-off the gap 53 between the fully inserted battery pack and the loading cavity 51, and the battery pack is disposed in a fixed position. When the case 2 and the electric vehicle 50 loading cavity 51 are fabricated, the mold extraction direction for the mold that form the case 2 is different than the mold extraction direction for the mold that forms the loading cavity 51. Consequently, the case 2 and the loading cavity 51 cannot be fabricated with essentially identical dimensions for a tight fit. In particular, the loading cavity 51 shown in the figures has an interior shape with a width that becomes gradually narrower towards the bottom, and that sets the mold extraction gradient during plastic molding. Consequently, by providing the sealing rim 24, the gap 53 between the battery pack and the loading cavity 51 is closed-off, case 2 vibration and movement is prevented, and the introduction of foreign objects, dirt, and dust etc. into the gap 53 is prevented.

Further, the bottom part of the case 2 shown in Figs. 4-6 is provided with a locking pin 15 that locks in a detachable manner into a locking mechanism 60 established at the bottom of the electric vehicle 50 loading cavity 51. The case 2 shown in the figures is provided with a cavity 25 opened in the bottom surface, and the locking pin 15 is disposed inside that cavity 25. In the case 2 of the figures, the cavity 25 is opened extending in the lengthwise direction of the bottom surface of the case 2, and the locking pin 15 is fixed in a horizontal orientation bridging the lateral width at the center section of the bottom surface. The locking pin 15 is a metal rod that is inserted at both ends into cylindrical holes 26 established on the inside of the case 2 to dispose it in a fixed position in the cavity 25. In the case 2 of Fig. 6, a pair of cylindrical holes 26 are formed in opposing positions on the inside surfaces of the first case 2A and the second case 2B, and the first case 2A and the second case 2B are connected together with both ends of the locking pin 15 inserted in the pair of cylindrical holes 26 to dispose the locking pin 15 inside the cavity 25.

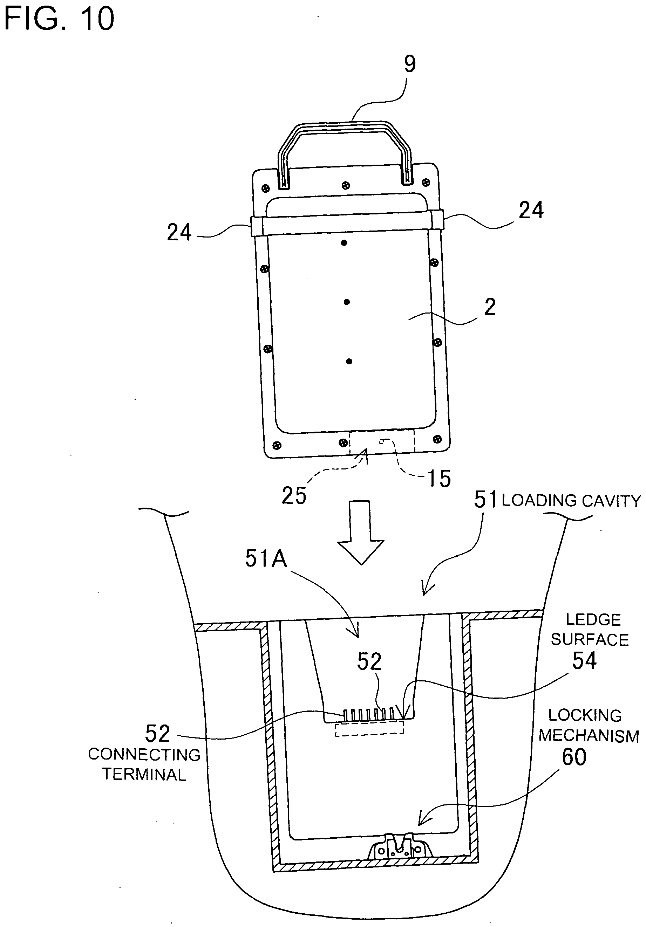

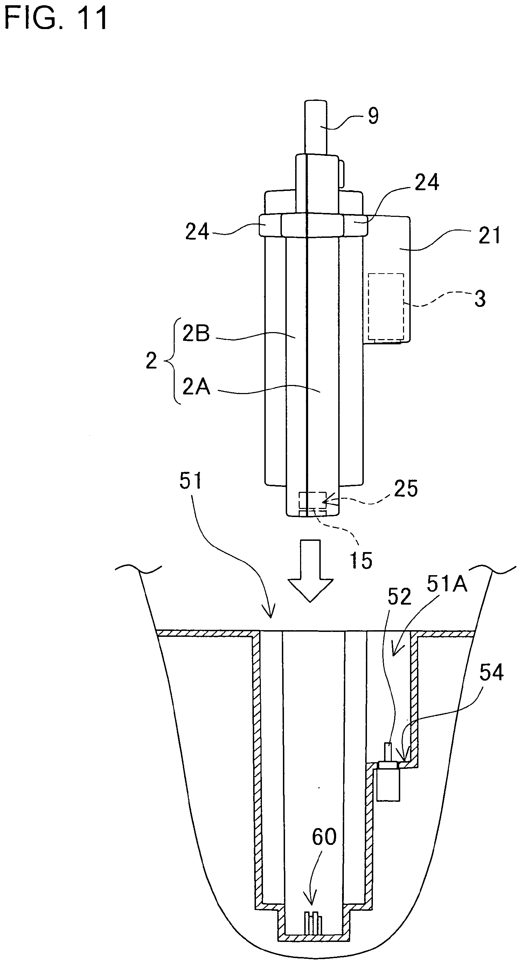

As shown in Figs. 10 and 11, when the battery pack is inserted in the electric vehicle 50 loading cavity 51, a locking mechanism 60 projecting out from the bottom surface of the loading cavity 51 is guided into the cavity 25 provided at the bottom of the case 2. The locking pin 15 disposed inside the cavity 25 is retained in a locked state by the locking mechanism 60. By holding the locking pin 15 with the locking mechanism 60, up and down movement of the battery pack is restrained, and separation and abrading at the connector 4 connection region is effectively prevented. In particular, since the bottom of the case 2 is held fixed by the locking mechanism 60 and the locking pin 15 and the top of the case 2 is held on the inside of the loading cavity 51 by the sealing rim 24, the case 2 is held in a fixed position vertically, and vibration and movement of the case 2 inside the loading cavity 51 can be reliably avoided.

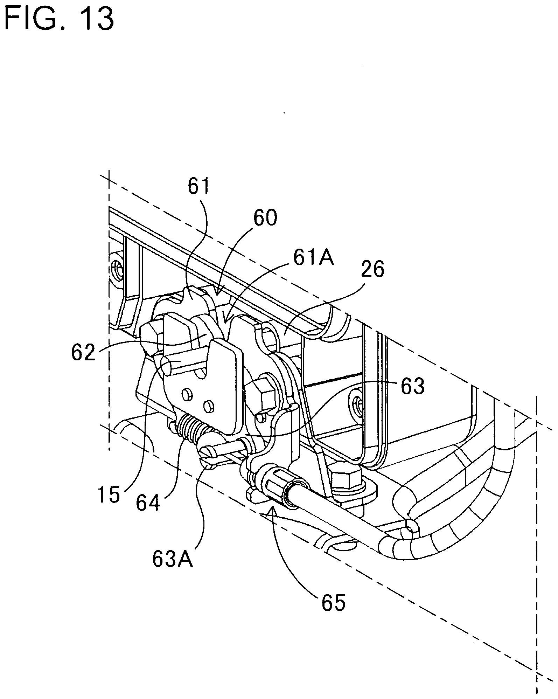

The locking mechanism 60 provided at the bottom of the electric vehicle 50 loading cavity 51 is a mechanism that locks and retains the locking pin 15 when the locking pin 15 is inserted, and allows the locking pin 15 to be pulled out when a lock release mechanism 65 is activated to unlock the locking pin 15. Locking mechanisms presently in general use can be utilized. The locking mechanism 60 shown in Figs. 13-15 is provided with a base-plate 61 that has an insertion groove 61A with an open upper end for locking pin 15 insertion; a locking-plate 62 connected to the base-plate 61 in a manner free to pivot around a first rotation axis 66, and having a locking groove 62A where the locking pin 15 can insert in a removable manner, a cam-plate 63 connected to the base-plate 61 in a manner free to pivot around a second rotation axis 67, and that latches the locking-plate 62 into a locked position; spring material 64 that acts to pull together the bottom ends of the locking-plate 62 and the cam-plate 63; and a lock release mechanism 65 that rotates the cam-plate 63 to release the locking-plate 62 from the locked position.

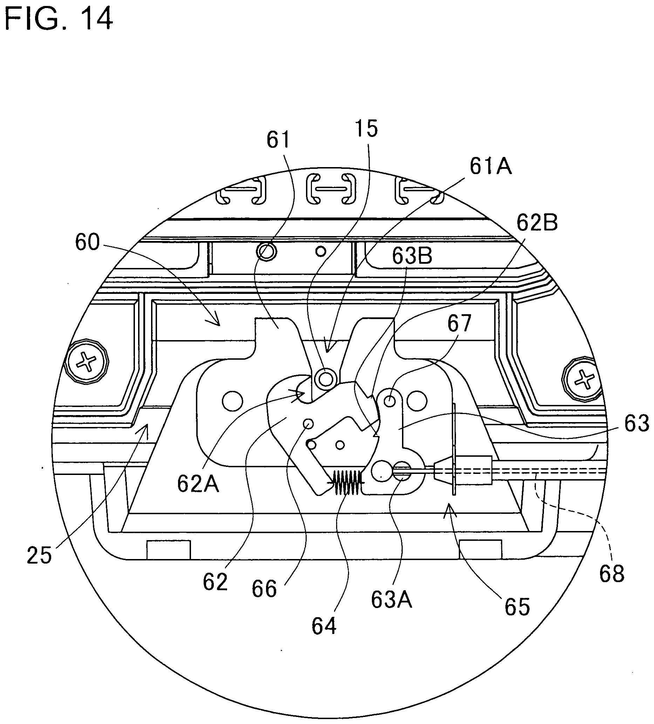

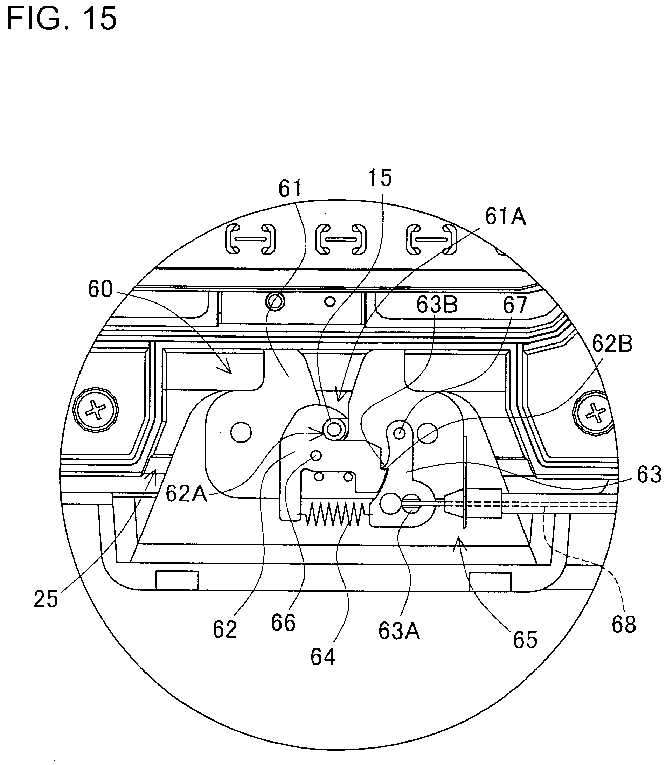

As shown in Fig. 14, when the battery pack is inserted into the loading cavity 51, the locking pin 15 inserts into the insertion groove 61A in the base-plate 61 of the locking mechanism 60. The locking pin 15 in the insertion groove 61A inserts into the locking-plate 62 locking groove 62A, which faces upward in the unlocked position. The locking-plate 62 rotates around the first rotation axis 66 to the locked position shown in Fig. 15. In that position, a latch section 62B on the locking-plate 62 interlocks with a latch section 63B on the cam-plate 63 to retain the locking pin 15 in the locking-plate 62 in a locked state that does not allow the locking pin 15 to pull out. In this locked state, the battery pack is set in the loading cavity 51 in a manner that cannot be pulled out. When removing the battery pack from the loading cavity 51, the lock release mechanism 65 is activated to release the locking pin 15 from the locked position. The lock release mechanism 65 of the figures is provided with a cable 68 with one end connected to a connecting section 63A on the cam-plate 63 and the other end having an activating mechanism such as a lever or key (not illustrated). The activating mechanism is operated to pull the cable 68, which rotates the cam-plate 63 around the second rotation axis 67. When the activating mechanism is operated to rotate the cam-plate 63, the locked state established by the latch sections on the cam-plate 63 and locking-plate 62 is unlocked, and the locking-plate 62 rotates back to the unlocked position shown in Fig. 14. In this state, the locking pin 15 is unlocked, and the battery pack can be removed from the loading cavity 51.

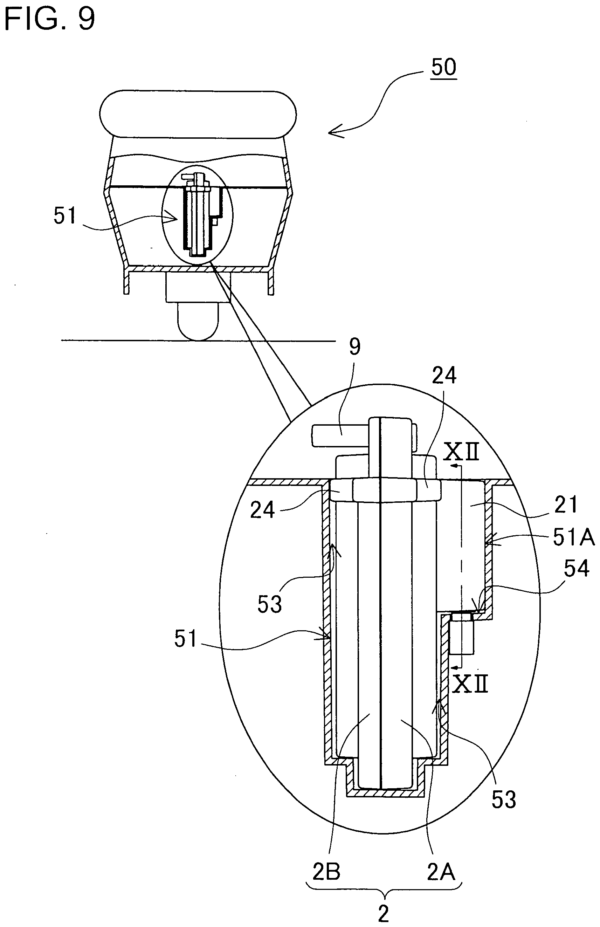

Further, the battery pack of Figs. 2-6 is provided with a folding grip 9 on the upper part of the case 2. The grip 9 is extended upward when the battery pack is loaded into or unloaded from the loading cavity 51. As shown in Fig. 9, the grip is folded downward when the battery pack is loaded and set inside the loading cavity 51. The user can easily load and unload this battery pack by holding the grip 9.

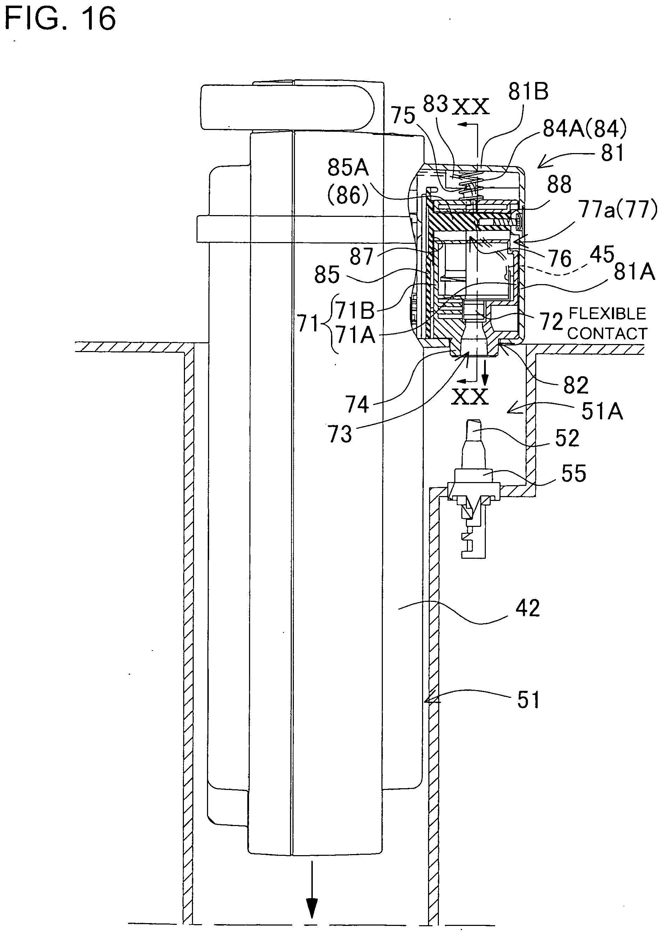

The battery pack can also have the structure shown in Figs. 16-21. In the battery pack shown in these figures, the connector 43 is provided with a plastic insulating connector case 71, and flexible contacts 72 that electrically connect with the connecting terminals 52 are housed inside the connector case 71. The bottom surface of the connector case 71 is open to form an insertion section 73 for insertion of the connecting terminals 52. In this battery pack, the connector case 71 is attached to the case 42 in a manner free to move up and down, which is the connecting terminal 52 insertion direction. The battery pack of the figures has the connector case 71 housed inside the case extension 81 protruding from the case 42, and has a floating configuration that allows the connector case 71 to move up and down inside the case extension 81. The connector case 71 disposed inside the case extension 81 is connected to the case 42 via an attachment plate 85.

The connector case 71 is made of plastic and formed with an overall rectangular block shape. The block-shaped connector case 71 is housed inside the case extension 81, and is formed with an outside shape smaller than the inside of the case extension 81 to allow movement inside the case extension 81. The connector case 71 is divided into two parts in the direction that the case extension 81 protrudes from the case 42, and a plurality of flexible contacts 72 are disposed in a mutually insulated manner between a first connector case 71A and a second connector case 71B. Each flexible contact 72 is connected via lead-wires 45 extending out from the connector case 71 to a circuit board (not illustrated). The connector case 71 is provided with an alignment projection 74 protruding from its bottom surface that inserts through the connector window 82 established in the case extension 81. The outline of the alignment projection 74 is essentially the same shape as the inside of the connector window 82 established in the case extension 81, and the shape of the alignment projection 74 allows it to insert in a precise position in the connector window 82. The alignment projection 74 has a height that enables it to protrude out from the connector window 82. Further, the connector case 71 is provided with a plurality of insertion sections 73 opened inside the alignment projection 74 for connecting terminal 52 insertion. Each insertion section 73 opens to a corresponding flexible contact 72 and allows the connecting terminals 52 inserted in the insertion sections 73 to be guided into the flexible contacts 72 while being insulated from each other. The connector case 71 described above is housed inside the case extension 81 in a manner allowing up and down movement with the alignment projection 74 protruding out from the connector window 82.

The attachment plate 85 disposes the connector case 71 in a set position inside the case extension 81. For the attachment plate 85 of the figures with the connector case 71 disposed inside the case extension 81, the connector case 71 is disposed in a set position sandwiched from both sides by the attachment plate 85 and a surface plate 81A, which is the inside surface of the front end of the case extension 81 on the case 42. The attachment plate 85 of the figures is provided with a plurality of connecting bosses 85A that pass through the connector case 71 and are formed in single-piece construction with the attachment plate 85. The ends of these connecting bosses 85A are attached to the case extension 81 surface plate 81A via set screws 88. The attachment plate 85 is attached to the case 42 via the connecting bosses 85A attached to the surface plate 81A. However, the attachment plate can also be directly attached to the case by connecting the perimeter region of the attachment plate without intervening connecting bosses.

The connector case 71 disposed in a floating configuration inside the case extension 81 has a range of movement that is set by a guiding mechanism 80. The guiding mechanism 80 of the figures is configured with guiding holes 76 established through the connector case 71, and guide rods 86 that insert through the guiding holes 76 and are attached to the battery pack case 42.

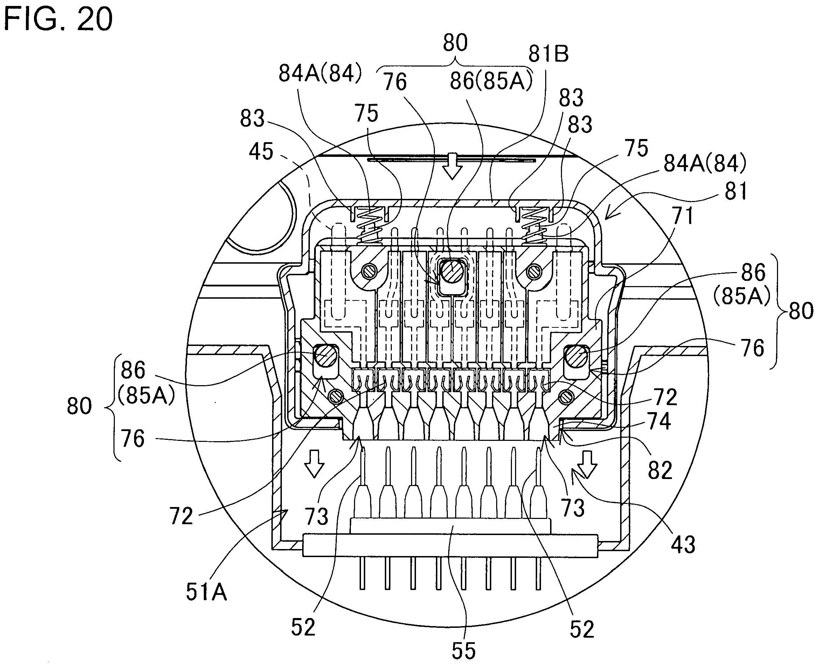

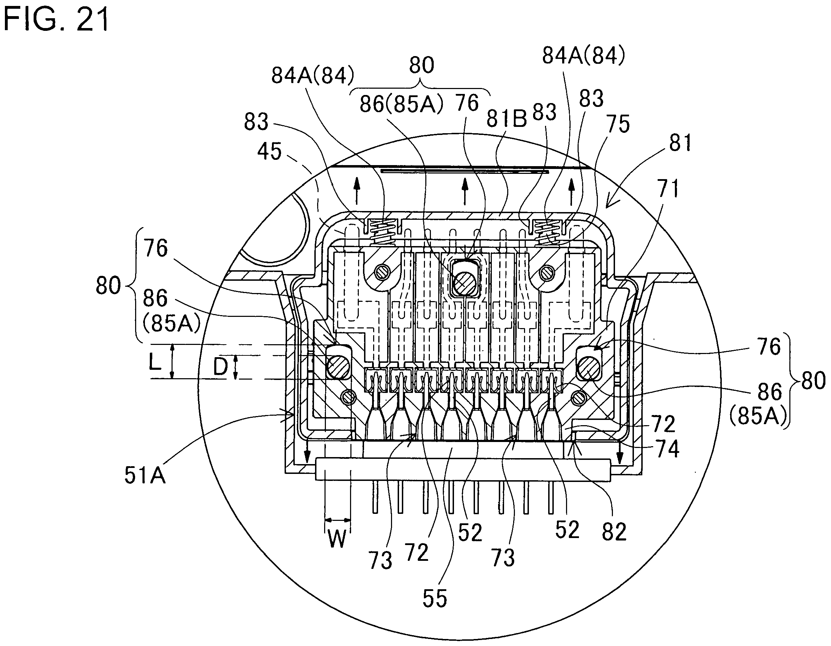

A plurality of guiding holes 76 are opened through the connector case 71, and guide rods 86 are inserted through the guiding holes 76. The guiding holes 76 of the figures are opened through the connector case 71 in the direction that the case extension 81 protrudes out from the case 42. The guiding holes 76 opened through the connector case 71 have an inside shape that is larger than the outside shape of the guide rods 86. The guide rods 86 can move inside and relative to the guiding holes 76 allowing the connector case 71 to move inside the case extension 81. The connector case 71 shown in the figures has guiding holes 76 opened through both sides and through the center of the upper region. To allow the connector case 71 to move in the connecting terminal 52 insertion direction, the guiding holes 76 are long holes extended in the direction of connecting terminal 52 insertion. In the connector case 71 of the figures, the long holes are rectangular in shape. However, the long holes can also be extended circular holes. The guiding holes 76 shown in Figs. 20 and 21 have an inside width (W) in the direction of connector case 71 lateral width that is almost equal to the outside diameter (D) of the guide rods 86, or is slightly larger than the outside diameter (D) of the guide rods 86. Further, the guiding holes 76 have an inside length (L) in the connecting terminal 52 insertion direction that is larger than the outside diameter (D) of the guide rods 86, and this allows the guide rods 76, which are inserted through the guiding holes 76, to move relative to the guiding holes 76 in the connecting terminal 52 insertion direction. The length (L) of the long holes, which are the guiding holes 76, sets the range of connector case 71 vertical movement. This is because the difference between the guiding hole 76 length (L) and the guide rod 86 outside diameter (D) is the distance the connector case 76 can move up and down. Accordingly, the long guiding holes 76 are opened with a length that allows the connector case 71 to move up and down within a specified range. To allow ideal movement of the connector case 71 relative to the case extension 81, the range of connector case 71 vertical movement is set from 1 mm to 20mm, preferably from 2mm to 10mm, and more preferably from 3mm to 7mm.

The guide rods 86 are attached to the case 42 to dispose them opposite the guiding holes 76 established through the connector case 71. The guide rods 86 are inserted through the connector case 71 guiding holes 76 and the ends of the guide rods 86 are attached via set screws 88 to the surface plate 81A, which is the front end of the case extension 81. In the battery pack of the figures, the connecting bosses 85A formed in single-piece construction with the attachment plate 85 serve as the guide rods 86. Therefore, the attachment plate 85 of the figures has a plurality of connecting bosses 85A established opposite the connector case 71 guiding holes 76 that act as guide rods 86. In this structure, the connecting bosses 85A serving as guide rods 86 set the range of connector case 71 movement while attaching the attachment plate 85 to the case 42. However, the guide rods can also be separate material from the connecting bosses. Further, the attachment plate does not necessarily have to be formed as a single unit with connecting bosses, and separate guide rods can be attached to the flat-plate attachment plate to attach the attachment plate to the case via the guide rods.

With the guiding mechanism 80 described above, the guide rods 86 are moved inside the guiding holes 76 of the connector case 71 disposed inside the case extension 81. More accurately, the guiding holes 76 are moved with respect to the guide rods 86 attached to the case extension 81 to move the connector case 71 in a given direction inside the case extension 81.

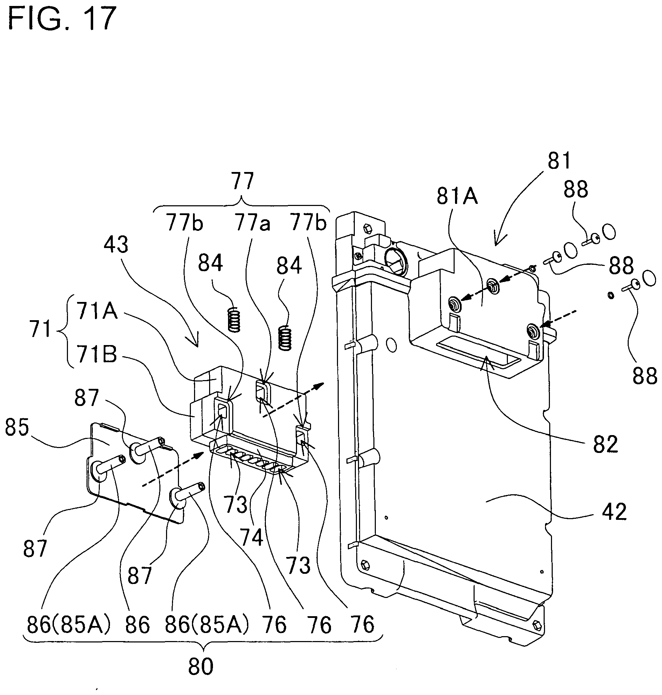

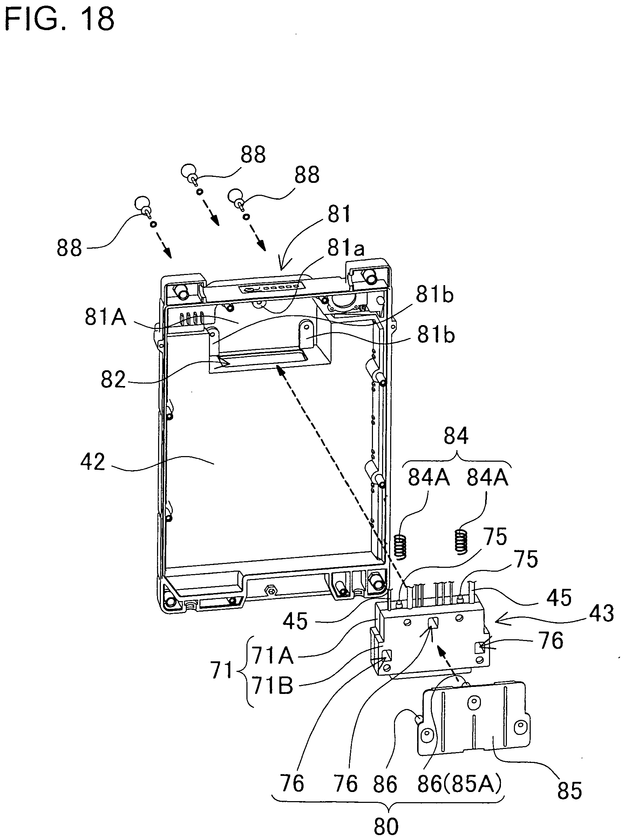

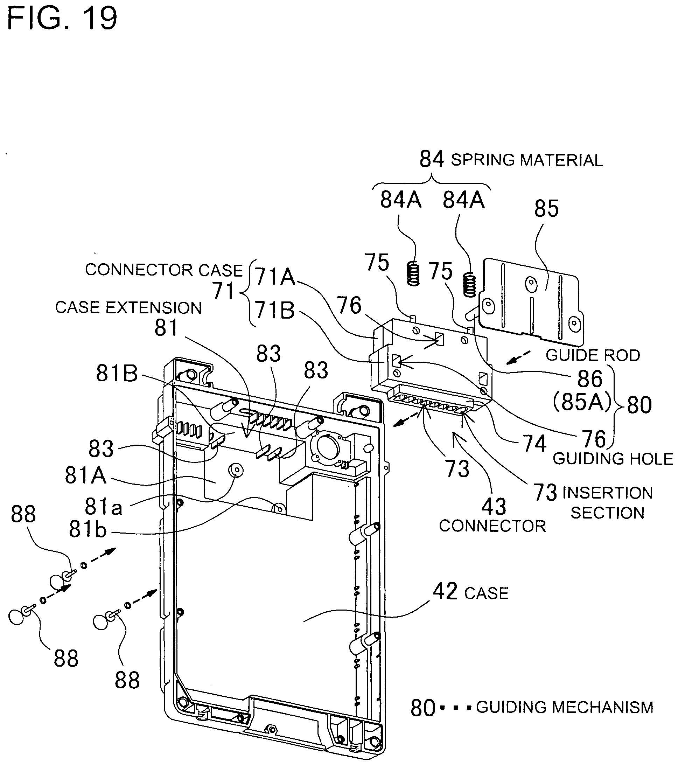

Further, to enable smooth movement of the connector case 71 between the case extension 81 surface plate 81A and the attachment plate 85 of the battery pack in the figures, the surface area of both sides of the connector case 71 contacting the surface of the attachment plate 85 and the inside surface of the surface plate 81A is reduced. The attachment plate 85 shown in the figures is provided with step projections 87 at the bases of the guide rods 86 that make contact with the surface of the connector case 71. Since only the step projection 87 surfaces, rather than the entire surface of the attachment plate 85, make contact with the surface of the connector case 71, sliding resistance is reduced allowing the connector case 71 to slide smoothly. Further, the battery pack of the figures has connecting projections 81a, 81b provided on the inside surface of the surface plate 81A at the interface of the inside surface of the surface plate 81A with the connector case 71. In addition, the surface of the connector case 71 is provided with alignment slots 77 that align with the connecting projections 81a, 81b. The alignment slots 77 shown in the figures are provided around the perimeters of the guiding holes 76 established in the connector case 71, the area opened by the alignment slots 77 is greater than that opened by the guiding holes 76 forming stepped regions at the guiding holes 76, and the inside shapes of the alignment slot 77 openings are larger than the outside shapes of the connecting projections 81a, 81b. As shown in Figs. 18 and 19, the connecting projection 81a established at the center of the upper part of the surface plate 81A has a circular outline. As shown in Fig. 17, the alignment slot 77a that aligns with that connecting projection 81a has a rectangular inside shape. As shown in Fig. 18, the connecting projections 81b established at both sides of the surface plate 81A have shapes that extend in the vertical direction. As shown in Fig. 17, the alignment slots 77b that align with those connecting projections 81b have the corners cut-out and have rectangular shapes extending in the vertical direction. Since the front end-planes of these connecting projections 81a, 81b make contact with and slide with respect to bottom surfaces of the alignment slots 77a, 77b, the sliding resistance between the connector case 71 and the surface plate 81A is reduced allowing smooth movement.

Further, to allow the connector case 71 to move flexibly up and down inside the case extension 81, the connector case 71 is disposed inside the case extension 81 through spring material 84. The spring material 84 shown in the figures is a coiled spring 84A. The coiled spring 84A spring material 84 is disposed between the upper surface of the connector case 71 and the inside surface of the upper plate 81B of the case extension 81, and acts to resiliently press the connector case 71 downward. To apply balanced spring action on the connector case 71, the battery pack of the figures has two coiled springs 84A disposed on the two sides of the upper surface of the connector case 71. To dispose the coiled springs 84A in prescribed positions, connecting rods 75 that insert into the coiled springs 84A are established protruding from the upper surface of the connector case 71. In addition, pairs of guide ribs 83 projecting downward from the inside surface of the upper plate 81B are provided at the locations of the connecting rods 75. The connecting rods 75 are inserted in the bottom ends of the coiled springs 84A, and the upper ends of the coiled springs 84A align between pairs of guide ribs 83 to dispose the coiled springs 84A in prescribed locations. The connector case 71, which is pressed downward by the coiled spring 84A spring material 84, moves resiliently up and down inside the case extension 81. As a result, up and down vibration of the case 42 during vehicle operation is absorbed by the spring material 84 to effectively prevent transmission of case 42 vibration to the connector case 71.

As shown in Figs. 16 and 20, when the battery pack described above is not loaded in the loading cavity 51, namely when the connecting terminals 52 are not inserted in the connector case 71 insertion sections 73, the connector case 71 is pressed downward by the spring material 84 to a low position inside the case extension 81. In this position, the alignment projection 74 protrudes out from the connector window 82. As shown in Fig. 21, when the battery pack is loaded in the loading cavity 51 and the connecting terminals 52 are inserted deeply into the insertion sections 73, the connecting terminals 52 are connected to the flexible contacts 72 inside the connector case 71. Here, the connector case 71 is moved higher relative to the case extension 81, the bottom surface of the alignment projection 74 is in contact with the upper surface of an attachment pedestal 55, which holds the connecting terminals 52, and the connector case 71 and attachment pedestal 55 are joined together in close contact.

With the connector case 71 attached to the case 42 in a floating configuration that allows the connector case 71 to move freely up and down with respect to the case 42, the connector case 71 connected to the connecting terminals 52 can move independently from the case 42 when the battery pack is vibrated up and down during vehicle operation. Accordingly, the connector case 71, which is connected to the connecting terminals 52, does not vibrate relative to the connecting terminals 52, and the connecting terminals 52 and connector case 71 are retained as a connected unit. Consequently, shift in the relative connecting positions of the connecting terminals 52 and the flexible contacts 72 can be effectively prevented and contact resistance malfunction can be reliably prevented.

In addition to a floating configuration that allows movement of the connector case in the connecting terminal insertion direction, the battery pack can also have a floating configuration that allows movement of the connector case in the thickness direction and width direction of the connecting terminal blades. A floating configuration that allows movement of the connector case in the thickness direction of the connecting terminal blades can be implemented by making the inside width of the long guiding holes larger than the outside diameter of the guide rods. Specifically, the inside width of the long guiding holes can be made larger than the outside diameter of the guide rods in the thickness direction of the connecting terminal blades to allow the guide rods to move relative to the guiding holes in the thickness direction. For example, some space can be provided in the width direction between the inside surfaces of the connector case guiding holes and the outside diameter of the guide rods to allow movement in the thickness direction of the connecting terminal blades while allowing smooth movement of the connector case with respect to the guide rods. Further, a floating configuration that allows the connector case to move in the width direction of the connecting terminal blades can be implemented by making the guide rods that pass through the guiding holes longer than the thickness of the connector case. Specifically, the gap between the case extension surface plate and the attachment plate can be made larger than thickness of the connector case to allow the connector case to move in the axial direction of the guide rods. The configurations described above allow the connector case to move freely inside the case extension in the horizontal direction as well as in the vertical direction. This allows battery pack vibration during vehicle operation to be more effectively absorbed, and prevents position shift between the connecting terminals and the flexible contacts. However, the battery pack does not necessarily require the connector case to be connected to the case in a floating configuration that allows horizontal movement. This is because the battery pack described previously inserts into the loading cavity via the case extension in a manner that closes-off gaps between the loading cavity to effectively prevent battery pack horizontal position shift. Consequently, the battery pack can effectively prevent position shift between the connecting terminals and the flexible contacts with a floating configuration that allows connector case movement in the vertical direction.

As shown in Figs. 8-11, the battery pack described above inserts downward into the electric vehicle 50 loading cavity 51 and is retained in a fixed position. In the electric vehicle of the figures, the inside of the loading cavity 51 is provided with a ledge surface 54 opposite the bottom surface of the case extension 21. The loading cavity 51 of the figures is provided with an extension cavity 51A on its inside surface to accept the case extension 21. The bottom surface of the extension cavity 51A is the ledge surface 54 that faces the bottom surface of the case extension 21. As shown in Figs. 9-11, the electric vehicle 50 ledge surface 54 is disposed above the bottom surface of the loading cavity 51, and connecting terminals 52 are mounted on the ledge surface 54 in a vertical orientation. The battery pack inserted in the loading cavity 51 has the bottom surface of the case extension 21 disposed at the ledge surface 54 (above the bottom of the loading cavity 51), and the connector 3 exposed from the connector window 22 in the bottom surface of the case extension 21 is connected to the connecting terminals 52.

Further, in the electric vehicle 50 of the figures, the ledge surface 54 opposite the bottom surface of the battery pack case extension 21 is inclined to drain off inflowing water to the bottom of the loading cavity 51. The ledge surface 54 of the figures is a rectangular surface that faces the bottom surface of the case extension 21. As shown in Fig. 10, the rectangular ledge surface 54 slopes in the lengthwise direction to decline towards one end. In the electric vehicle 50 of Figs. 8 and 10, the lengthwise direction of the ledge surface 54 extends in the forward to aft direction of the electric motor-bike, and the loading cavity 51 ledge surface 54 has a slope that declines in the aft direction of the electric motor-bike. However, the ledge surface can also have a slope that declines towards the front of the electric motor-bike. In a structure with loading cavity 51 ledge surface 54 declination in the lengthwise direction, even if water and foreign objects enter the loading cavity 51 and flow onto the ledge surface 54, they flow along the sloped ledge surface 54, off the lower end, and down towards the bottom of the loading cavity 51. Consequently, collection of water and foreign objects at the connecting region of the connecting terminals 52 and the connector 3 can be prevented, and detrimental effects from water and foreign objects entering the loading cavity 51 can be effectively prevented.

The ledge surface 54 of the loading cavity 51 shown in Figs. 9 and 11 is also sloped in the width direction of the rectangular ledge surface 54 with a declination towards the inside of the loading cavity 51. In a structure with ledge surface 54 that declines towards the inside of the loading cavity 51, even if water and foreign objects enter the loading cavity 51 and flow onto the ledge surface 54, they flow along the sloped ledge surface 54 towards the inside of the loading cavity 51, off the lower edge, and down towards the bottom of the loading cavity 51. Consequently, collection of water and foreign objects at the connecting region of the connecting terminals 52 and the connector 3 can be prevented, and detrimental effects from water and foreign objects entering the loading cavity 51 can be effectively prevented.

Since the electric vehicle 50 described above has a loading cavity 51 ledge surface 54 that slopes in both the lengthwise and widthwise directions, the electric vehicle 50 has the characteristic that inflowing water and foreign objects can be quickly drained off towards the bottom of the loading cavity 51. However, the electric vehicle of the present invention can also have a loading cavity ledge surface sloped in only one direction to drain water and foreign objects flowing onto the ledge surface towards the bottom of the loading cavity.

It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims.

### LABELS

- 1: BATTERY BLOCK
- 2: CASE
- 2A: FIRST CASE
- 2B: SECOND CASE
- 3: CONNECTOR
- 4: INSULATING PLATE
- 4A: ATTACHMENT STAND-OFF
- 5: LEAD-WIRE
- 6: PRINTED CIRCUIT BOARD
- 7: SUB-CONNECTOR
- 8: CLOSING CAP
- 9: GRIP
- 11: BATTERY
- 12: BATTERY HOLDER
- 12A: CYLINDER
- 13: LEAD-PLATE
- 15: LOCKING PIN
- 21: CASE EXTENSION
- 21A: BOTTOM SURFACE PLATE
- 21B: SIDE-WALL
- 22: CONNECTOR WINDOW
- 23: INNER WALL
- 23a: CONNECTING GROOVE
- 23b: CONNECTING RIDGE
- 24: SEALING RIM
- 25: CAVITY
- 26: CYLINDRICAL HOLE
- 27: OPENING
- 29: SCREW
- 31: INSULATING COVER
- 32: FLEXIBLE CONTACT
- 32A: POWER SUPPLY TERMINAL
- 32B: SIGNAL TERMINAL
- 32X: FLEXIBLE ARM
- 32Y: FOLDED SECTION
- 33: INSERTION SECTION
- 34: ALIGNMENT PROJECTION
- 42: CASE
- 43: CONNECTOR
- 45: LEAD-WIRE
- 50: ELECTRIC VEHICLE
- 51: LOADING CAVITY
- 51A: EXTENSION CAVITY
- 52: CONNECTING TERMINAL
- 53: GAP
- 54: LEDGE SURFACE
- 55: ATTACHMENT PEDESTAL
- 60: LOCKING MECHANISM
- 61: BASE-PLATE
- 61A: INSERTION GROOVE
- 62: LOCKING-PLATE
- 62A: LOCKING GROOVE
- 62B: LATCH SECTION
- 63: CAM-PLATE
- 63A: CONNECTING SECTION
- 63B: LATCH SECTION
- 64: SPRING MATERIAL
- 65: LOCK RELEASE MECHANISM
- 66: FIRST ROTATION AXIS
- 67: SECOND ROTATION AXIS
- 68: CABLE
- 71: CONNECTOR CASE
- 71A: FIRST CASE
- 71B: SECOND CASE
- 72: FLEXIBLE CONTACT
- 73: INSERTION SECTION
- 74: ALIGNMENT PROJECTION
- 75: CONNECTING RODS
- 76: GUIDING HOLE
- 77: ALIGNMENT SLOT
- 77a: ALIGNMENT SLOT
- 77b: ALIGNMENT SLOT
- 80: GUIDING MECHANISM
- 81: CASE EXTENSION
- 81A: SURFACE PLATE
- 81a: CONNECTING PROJECTIONS
- 81b: CONNECTING PROJECTIONS
- 81B: UPPER PLATE
- 82: CONNECTOR WINDOW
- 83: GUIDE RIB
- 84: SPRING MATERIAL
- 84A: COILED SPRING
- 85: ATTACHMENT PLATE
- 85A: CONNECTING BOSS
- 86: GUIDE ROD
- 87: STEP PROJECTION
- 88: SET SCREW
- 92: CASE
- 93: CONNECTOR
- 94: INSERTION SECTION

## Claims

1. A battery pack that is loaded in an electric vehicle (59) in a removable manner and supplies power to the electric vehicle (50) comprising:
a plurality of batteries (11) that can be charged;
a case (2) that houses the batteries (11); and
a connector (3; 43) that connects to the electric vehicle (50) connecting terminals (52) to supply power from the batteries (11) housed in the case (2);
wherein the battery pack is inserted downward into, and disposed in a fixed position in a loading cavity (51) in the electric vehicle (50) to connect the connector (3; 43) to the connecting terminals (52) mounted in the electric vehicle (50) and supply power to the electric vehicle (50),
wherein the connector (3; 43) is attached to the case (2) in an orientation that establishes an insertion section (33) on the underside of the case (2), and this enables the connector (3; 43) to connect to the connecting terminals (52) mounted in the electric vehicle (50) via the weight of the battery pack,
wherein the case (2) is provided with a case extension (21) that protrudes from the surface of the case (2) and holds the connector (3; 43) inside,
wherein the bottom surface of the case extension (21) is disposed above the bottom surface of the case (2), and the bottom surface of the case extension (21) has a connector window (22) opened to expose the connector (3; 43) insertion section (33) outside the case (2),
wherein the case extension (21) is inserted in the electric vehicle (50) loading cavity (51) to connect the connector (3; 43) to the connecting terminals (52) mounted in the electric vehicle (50), **characterized in that** the connector (43) is provided with a connector case (71) housing flexible contacts (72) that make electrical connection with the connecting terminals (52); insertion sections (73) are opened through the bottom surface of the connector case (71) for connecting terminal (52) insertion, and
wherein the connector case (71) is attached to the battery pack case (42) in a manner that allows it to move freely in the direction of connecting terminal (52) insertion.

2. The battery pack as cited in claim 1, wherein the case extension (21) is tapered to make the lateral width narrower towards the bottom.

3. The battery pack as cited in claim 1, wherein the case (2) is provided with a sealing rim (24) protruding from the perimeter of the upper part of the case (2) that closes-off the gap (53) between the case (2) and the loading cavity (51) established in the electric vehicle (50).

4. The battery pack as cited in claim 3, wherein the sealing rim (24) is established around regions of the case (2) except at the case extension (21).

5. The battery pack as cited in any of claims 1 to 4, wherein the electric vehicle (50) is either an electric motor-bike or a bicycle with electrical-assist.

6. The battery pack as cited in any of claims 1 to 5, wherein the bottom surface of the case extension (21) is disposed in a range of 20% of the vertical height of the case (2) above and below the vertical center.

7. The battery pack as cited in any of claims 1 to 6, wherein a folding grip (9) is provided on the upper part of the case (2).

8. The battery pack as cited in any of claims 1 to 7, wherein a locking pin (15), which locks in a detachable manner into a locking mechanism (60) established at the bottom of the electric vehicle (50) loading cavity (51), is provided at the bottom part of the case (2).

9. The battery pack as cited in any of claims 1 to 8, wherein spring material (84) is provided acting in a downward direction on the connector case (71), and the connector case (71) is configured to move resiliently up and down inside the case extension (81) through the action of the spring material (84).

10. The battery pack as cited in claim 9, wherein a guiding mechanism (80) is provided that sets the range of movement of the connector case (71); the guiding mechanism (80) is made up of guiding holes (76) established through the connector case (71), and guide rods (86) that insert through the guiding holes (76) and are attached to the case (42); and the guiding holes (76) are long slots that allow the connector case (71) to move in the connecting terminal (52) insertion direction.

11. An electric vehicle comprising: a battery pack and a loading cavity (51) to hold the battery pack inserted downward into a fixed position; and
connecting terminals (52) mounted in the loading cavity (51),
wherein a connector (3; 43) of the battery pack loaded in the loading cavity (51) connects to the connecting terminals (52), and power is supplied from the battery pack,
wherein the connector (3; 43) of the battery pack is attached to a case (2), which houses a plurality of batteries (11) that can be charged, connecting to the loading cavity (51) connecting terminals (52) to supply power from the batteries (11) housed in the case (2),
wherein the connector (3; 43) is attached to the case (2) in an orientation that establishes an insertion section (33) on the underside of the case (2), and this enables the connector (3; 43) to connect to the connecting terminals (52) mounted in the loading cavity (51) via the weight of the battery pack,
wherein the case (2) is provided with a case extension (21) that protrudes from the surface of the case (2) and holds the connector (3; 43) inside, the bottom surface of the case extension (21) is disposed above the bottom surface of the case (2), and the bottom surface of the case extension (21) has a connector window (22) opened to expose the connector (3; 43) insertion section (33) outside the case (2),
wherein the loading cavity (51) has a ledge surface (54) opposite the bottom surface of the battery pack case extension (21), the ledge surface (54) is disposed above the bottom surface of the loading cavity (51), and the connecting terminals (52) are disposed on the ledge surface (54),
wherein the battery pack is inserted into the loading cavity (51), and the connector (3; 43) exposed from the bottom surface of the case extension (21) is connected with the connecting terminals (52) disposed on the ledge surface (54), and **characterized in that** the case (2) is provided with a sealing rim (24) protruding from the perimeter of the upper part of the case (2) that closes-off the gap (53) between the case (2) and the loading cavity (51) established in the electric vehicle (50).

12. The electric vehicle equipped with a battery pack as cited in claim 11 wherein the ledge surface (54) opposite the bottom surface of the battery pack case extension (21) is sloped to drain off inflowing water to the bottom surface of the loading cavity (51).

13. The electric vehicle equipped with a battery pack as cited in claim 11, wherein the case extension (21) is tapered to make the lateral width narrower towards the bottom.

14. The electric vehicle equipped with a battery pack as cited in claim 11, wherein the sealing rim (24) is established around regions of the case (2) except at the case extension (21).

## Patentansprüche

1. Ein Batteriepack, der in ein elektrisches Fahrzeug (59) auf eine entfernbare Weise geladen ist und dem elektrischen Fahrzeug (50) Strom zuführt, umfassend:
eine Vielzahl von Batterien (11), die aufgeladen werden können;
ein Gehäuse (2), das die Batterien (11) aufnimmt; und
einen Steckverbinder (3; 43), der die Anschlüsse (52) des elektrischen Fahrzeugs (50) verbindet, um Strom aus den im Gehäuse (2) untergebrachten Batterien (11) zu liefern;
wobei der Batteriepack in einen Ladehohlraum (51) im elektrischen Fahrzeug (50) nach unten gerichtet eingeführt und in einer ortsfesten Position angeordnet wird, um den Steckverbinder (3; 43) mit den Anschlüssen (52) zu verbinden, die im elektrischen Fahrzeug montiert sind und Strom zum elektrischen Fahrzeug zu liefern,
wobei der Steckverbinder (3; 43) in einer Orientierung am Gehäuse (2) angebracht ist, die ein Einschubteil (33) auf der Unterseite des Gehäuses (2) herstellt, und dieses ermöglicht dem Steckverbinder (3; 43) sich mit den Anschlüssen (52), die im elektrischen Fahrzeug (50) montiert sind, über das Gewicht des Batteriepacks zu verbinden,
wobei das Gehäuse (2) mit einer Gehäuseverlängerung (21) versehen ist, die aus der Oberfläche des Gehäuses (2) hervorsteht und den Steckverbinder (3; 43) im Innern festhält,
wobei die untere Oberfläche der Gehäuseverlängerung (21) über der unteren Oberfläche des Gehäuses (2) angeordnet ist, und die untere Oberfläche der Gehäuseverlängerung (21) ein Steckverbinderfenster (22) aufweist, das geöffnet ist, um den Einschubteil (33) des Steckverbinders (3; 43) außerhalb des Gehäuses (2) freizulegen,
wobei die Gehäuseverlängerung (21) in den Ladehohlraum (51) des elektrischen Fahrzeugs (50) eingeschoben wird, um den Verbinder (3; 43) mit den im elektrischen Fahrzeug (50) montierten Anschlüssen (52) zu verbinden,
**dadurch gekennzeichnet, dass**
der Verbinder (43) mit einem Steckverbindergehäuse (71) versehen ist, das flexible Kontakte (72) beherbergt, die elektrische Verbindung mit den Anschlüssen (52) herstellen; Einschubteile (73) werden durch die untere Oberfläche des Steckverbindergehäuses (71) für den Einschub von Anschlüssen (52) geöffnet, und
wobei das Steckverbindergehäuse (71) auf eine Weise an das Batteriepackgehäuse (42) angebracht ist, die ihm erlaubt, sich frei in die Richtung des Einschubs für die Anschlüsse (52) zu bewegen.

2. Der Batteriepack nach Anspruch 1, wobei die Gehäuseverlängerung (21) verjüngt ist, um die laterale Breite in Richtung des Bodens enger zu machen.

3. Der Batteriepack nach Anspruch 1, wobei das Gehäuse (2) mit einem abdichtenden Rand (24) versehen ist, der aus dem Umfang des oberen Teils des Gehäuses (2) hervorsteht, der den Spalt (53) zwischen dem Gehäuse (2) und dem Ladehohlraum (51) absperrt, der im elektrischen Fahrzeug (50) eingerichtet ist.

4. Der Batteriepack nach Anspruch 3, wobei der abdichtende Rand (24) um Bereiche des Gehäuses (2) herum, außer an der Gehäuseverlängerung (21) eingerichtet ist.

5. Der Batteriepack nach einem der Ansprüche 1 bis 4, wobei das elektrische Fahrzeug (50) entweder ein elektrisches Motorrad oder ein Fahrrad mit elektrischer Unterstützung ist.

6. Der Batteriepack nach einem der Ansprüche 1 bis 5, wobei die untere Oberfläche der Gehäuseverlängerung (21) in einem Bereich von 20% der senkrechten Höhe des Gehäuses (2) über und unter dem Senkrechten Mittelpunkt angeordnet ist.

7. Der Batteriepack nach einem der Ansprüche 1 bis 6, wobei ein klappbarer Griff (9) am oberen Teil des Gehäuses (2) vorgesehen ist.

8. Der Batteriepack nach einem der Ansprüche 1 bis 7, wobei ein Verriegelungsstift (15), der auf eine lösbare Weise in einen am Boden des Ladehohlraums (51) des elektrischen Fahrzeugs (50) eingerichteten Verriegelungsmechanismus (60) verriegelt, am unteren Teil des Gehäuses (2) bereitgestellt ist.

9. Der Batteriepack nach einem der Ansprüche 1 bis 8, wobei Federmaterial (84) bereitgestellt ist, das in einer Abwärtsrichtung am Steckverbindergehäuse (71) wirkt, und wobei das Steckverbindergehäuse (71) konfiguriert ist, sich durch die Wirkung des Federmaterials (84) im Innern der Gehäuseverlängerung (81) elastisch Auf und Ab zu bewegen.

10. Der Batteriepack nach Anspruch 9, wobei ein Führungsmechanismus (80) bereitgestellt ist, der den Bewegungsbereich des Steckverbindergehäuses (71) einstellt; wobei der Führungsmechanismus (80) aus Führungslöchern (76), die durch das Steckverbindergehäuse (71) erstellt sind und Führungsstangen (86) besteht, die durch die Führungslöcher (76) eingeführt und an das Gehäuse (42) angebracht sind; und die Führungslöcher (76) sind lange Schlitze, die dem Steckverbindergehäuse (71) erlauben, sich in der Einschubrichtung der Anschlüsse (52) zu bewegen.

11. Ein elektrisches Fahrzeug, umfassend: Einen Batteriepack und einen Ladehohlraum (51) zum Festhalten des Batteriepacks, der nach unten in eine ortsfeste Position eingeschoben wird; und
im Ladehohlraum (51) montierte Anschlüsse (52),
wobei sich ein Steckverbinder (3; 43) des in den Ladehohlraum (52) geladenen Batteriepacks mit den Anschlüssen (52) verbindet, und Strom vom Batteriepack geliefert wird,
wobei der Steckverbinder (3; 43) des Batteriepacks an ein Gehäuse (2) angebracht ist,
welches eine Vielzahl von Batterien (11) beherbergt, die aufgeladen werden können, und sich mit den Anschlüssen (52) des Ladehohlraums (51) verbinden, um Strom von den im Gehäuse (2) untergebrachten Batterien (11) zu liefern,
wobei der Steckverbinder (3; 43) in einer Orientierung am Gehäuse (2) angebracht ist, die ein Einschubteil (33) auf der Unterseite des Gehäuses (2) herstellt, und dieses ermöglicht dem Steckverbinder (3; 43) sich mit den Anschlüssen (52) zu verbinden, die über das Gewicht des Batteriepacks im Ladehohlraum (51) montiert sind,
wobei das Gehäuse (2) mit einer Gehäuseverlängerung (21) versehen ist, die aus der Oberfläche des Gehäuses (2) hervorsteht und den Steckverbinder (3; 43) im Innern festhält, wobei die untere Oberfläche der Gehäuseverlängerung (21) über der unteren Oberfläche des Gehäuses (2) angeordnet ist und die untere Oberfläche der Gehäuseverlängerung (21) ein Steckverbinderfenster (22) aufweist, das geöffnet ist, um den Einschubteil (33) des Steckverbinders (3; 43) außerhalb des Gehäuses (2) freizulegen,
wobei der Ladehohlraum (51) eine vorspringende Randoberfläche (54) gegenüber der unteren Oberfläche der Gehäuseverlängerung (21) des Batteriepacks aufweist, wobei die vorspringende Randoberfläche (54) über der unteren Oberfläche des Laderaums (51) angeordnet ist und die Anschlüsse (52) auf der vorspringenden Randoberfläche (54) angeordnet sind,
wobei der Batteriepack in den Ladehohlraum (51) eingeschoben wird, und der Steckverbinder (3; 43), der ab der unteren Oberfläche der Gehäuseverlängerung (21) freigelegt ist, wird mit den auf der vorspringenden Randoberfläche (54) angeordneten Anschlüssen (52) verbunden, und
**dadurch gekennzeichnet, dass**
das Gehäuse (2) mit einem abdichtenden Rand (24) versehen ist, der aus dem Umfang des oberen Teils des Gehäuses (2) hervorsteht, der den Spalt (53) zwischen dem Gehäuse (2) und dem Ladehohlraum (51) absperrt, der im elektrischen Fahrzeug (50) eingerichtet ist.

12. Das elektrische Fahrzeug, das mit einem Batteriepack nach Anspruch 11 ausgerüstet ist, wobei die vorspringende Randoberfläche (54) gegenüber der unteren Oberfläche der Gehäuseverlängerung (21) des Batteriepacks abgeschrägt ist, um einlaufendes Wasser zur unteren Oberfläche des Ladehohlraums (51) abzulassen.

13. Das elektrische Fahrzeug, das mit einem Batteriepack nach Anspruch 11 ausgerüstet ist, wobei die Gehäuseverlängerung (21) verjüngt ist, um die laterale Breite in Richtung des Bodens enger zu machen.

14. Das elektrische Fahrzeug mit einem Batteriepack nach Anspruch 11, wobei der abdichtende Rand (24) um Bereiche des Gehäuses (2) herum, außer an der Gehäuseverlängerung (21), eingerichtet ist.

## Revendications

1. Bloc-batterie qui est chargé dans un véhicule électrique (59) d'une manière amovible et alimente en énergie le véhicule électrique (50) comprenant :
une pluralité de batteries (11) qui peuvent être chargées ;
un boîtier (2) qui loge les batteries (11) ; et
un connecteur (3 ; 43) qui se connecte aux bornes de connexion (52) du véhicule électrique (50) pour délivrer de l'énergie à partir des batteries (11) logées dans le boîtier (2) ;
dans lequel le bloc-batterie est inséré vers le bas et disposé dans une position fixe dans une cavité de chargement (51) dans le véhicule électrique (50) pour connecter le connecteur (3 ; 43) aux bornes de connexion (52) montées dans le véhicule électrique (50) et délivrer de l'énergie au véhicule électrique (50),
dans lequel le connecteur (3 ; 43) est fixé au boîtier (2) dans une orientation qui établit une section d'insertion (33) sur le dessous du boîtier (2), et ceci permet au connecteur (3 ; 43) de se connecter aux bornes de connexion (52) montées dans le véhicule électrique (50) par le biais du poids du bloc-batterie,
dans lequel le boîtier (2) est muni d'une extension de boîtier (21) qui fait saillie à partir de la surface du boîtier (2) et maintient le connecteur (3 ; 43) à l'intérieur,
dans lequel la surface inférieure de l'extension de boîtier (21) est disposée au-dessus de la surface inférieure du boîtier (2) et la surface inférieure de l'extension de boîtier (21) a une fenêtre de connecteur (22) ouverte pour exposer la section d'insertion (33) du connecteur (3 ; 43) à l'extérieur du boîtier (2),
dans lequel l'extension de boîtier (21) est insérée dans la cavité de chargement (51) du véhicule électrique (50) pour connecter le connecteur (3 ; 43) aux bornes de connexion (52) montées dans le véhicule électrique (50),
**caractérisé en ce que**
le connecteur (43) est muni d'un boîtier de connecteur (71) logeant des contacts flexibles (72) qui réalise une connexion électrique avec les bornes de connexion (52) ; des sections d'insertion (73) sont ouvertes à travers la surface inférieure du boîtier de connecteur (71) pour l'insertion des bornes de connexion (52), et
dans lequel le boîtier de connecteur (71) est fixé au boîtier de bloc-batterie (42) d'une manière qui lui permet de se déplacer librement dans la direction d'insertion des bornes de connexion (52).

2. Bloc-batterie selon la revendication 1, dans lequel l'extension de boîtier (21) est effilée pour rendre la largeur latérale plus étroite vers le bas.

3. Bloc-batterie selon la revendication 1, dans lequel le boîtier (2) est muni d'un bord d'étanchéité (24) faisant saillie à partir du périmètre de la partie supérieure du boîtier (2) qui ferme l'espace (53) entre le boîtier (2) et la cavité de chargement (51) établie dans le véhicule électrique (50).

4. Bloc-batterie selon la revendication 3, dans lequel le bord d'étanchéité (24) est établi autour de régions du boîtier (2) sauf au niveau de l'extension de boîtier (21).

5. Bloc-batterie selon l'une quelconque des revendications 1 à 4, dans lequel le véhicule électrique (50) est soit une motocyclette électrique soit une bicyclette avec assistance électrique.

6. Bloc-batterie selon l'une quelconque des revendications 1 à 5, dans lequel la surface inférieure de l'extension de boîtier (21) est disposée dans une plage de 20 % de la hauteur verticale du boîtier (2) au-dessus et au-dessous du centre vertical.

7. Bloc-batterie selon l'une quelconque des revendications 1 à 6, dans lequel une poignée pliante (9) est disposée sur la partie supérieure du boîtier (2).

8. Bloc-batterie selon l'une quelconque des revendications 1 à 7, dans lequel une goupille de verrouillage (15), qui se verrouille d'une manière détachable dans un mécanisme de verrouillage (60) établi au niveau du fond de la cavité de chargement (51) du véhicule électrique (50), est disposée au niveau de la partie inférieure du boîtier (2).

9. Bloc-batterie selon l'une quelconque des revendications 1 à 8, dans lequel un matériau à ressort (84) est disposé pour agir dans une direction vers le bas sur le boîtier de connecteur (71) et le boîtier de connecteur (71) est configuré pour se déplacer de manière élastique vers le haut et vers le bas à l'intérieur de l'extension de boîtier (81) par le biais de l'action du matériau à ressort (84).

10. Bloc-batterie selon la revendication 9, dans lequel un mécanisme de guidage (80) est disposé pour régler l'amplitude de mouvement du boîtier de connecteur (71) ; le mécanisme de guidage (80) est constitué de trous de guidage (76) réalisés à travers le boîtier de connecteur (71) et de tiges de guidage (86) qui s'insèrent à travers les trous de guidage (76) et sont fixées au boîtier (42) ; et les trous de guidage (76) sont des fentes allongées qui permettent au boîtier de connecteur (71) de se déplacer dans la direction d'insertion des bornes de connexion (52).

11. Véhicule électrique comprenant : un bloc-batterie et une cavité de chargement (51) pour maintenir le bloc-batterie inséré vers le bas dans une position fixe ; et
des bornes de connexion (52) montées dans la cavité de chargement (51),
dans lequel un connecteur (3 ; 43) du bloc-batterie chargé dans la cavité de chargement (51) se connecte aux bornes de connexion (52) et de l'énergie est délivrée à partir du bloc-batterie,
dans lequel le connecteur (3 ; 43) du bloc-batterie est fixé à un boîtier (2), qui loge une pluralité de batteries (11) qui peuvent être chargées, en se connectant aux bornes de connexion (52) de la cavité de chargement (51) pour délivrer de l'énergie à partir des batteries (11) logées dans le boîtier (2),
dans lequel le connecteur (3 ; 43) est fixé au boîtier (2) dans une orientation qui établit une section d'insertion (33) sur le dessous du boîtier (2), et ceci permet au connecteur (3 ; 43) de se connecter aux bornes de connexion (52) montées dans la cavité de chargement (51) par le biais du poids du bloc-batterie,
dans lequel le boîtier (2) est muni d'une extension de boîtier (21) qui fait saillie à partir de la surface du boîtier (2) et maintient le connecteur (3 ; 43) à l'intérieur, la surface inférieure de l'extension de boîtier (21) est disposée au-dessus de la surface inférieure du boîtier (2) et la surface inférieure de l'extension de boîtier (21) a une fenêtre de connecteur (22) ouverte pour exposer la section d'insertion (33) du connecteur (3 ; 43) à l'extérieur du boîtier (2),
dans lequel la cavité de chargement (51) a une surface de rebord (54) opposée à la surface inférieure de l'extension de boîtier (21) du bloc-batterie, la surface de rebord (54) est disposée au-dessus de la surface inférieure de la cavité de chargement (51) et les bornes de connexion (52) sont disposées sur la surface de rebord (54),
dans lequel le bloc-batterie est inséré dans la cavité de chargement (51) et le connecteur (3 ; 43) exposé à partir de la surface inférieure de l'extension de boîtier (21) est connecté aux bornes de connexion (52) disposées sur la surface de rebord (54), et
**caractérisé en ce que**
le boîtier (2) est muni d'un bord d'étanchéité (24) faisant saillie à partir du périmètre de la partie supérieure du boîtier (2) qui ferme l'espace (53) entre le boîtier (2) et la cavité de chargement (51) établie dans le véhicule électrique (50).

12. Véhicule électrique équipé d'un bloc-batterie selon la revendication 11, dans lequel la surface de rebord (54) opposée à la surface inférieure de l'extension de boîtier de bloc-batterie (21) est inclinée pour évacuer l'eau qui afflue vers la surface inférieure de la cavité de chargement (51).

13. Véhicule électrique équipé d'un bloc-batterie selon la revendication 11, dans lequel l'extension de boîtier (21) est effilée pour rendre la largeur latérale plus étroite vers le bas.

14. Véhicule électrique équipé d'un bloc-batterie selon la revendication 11, dans lequel le bord d'étanchéité (24) est établi autour de régions du boîtier (2) sauf au niveau de l'extension de boîtier (21).
